(19) Europäisches Patentamt
European Patent Office
Office européen des brevets

(11) EP 4 664 651 A1

(12) EUROPEAN PATENT APPLICATION
published in accordance with Art. 153(4) EPC

(43) Date of publication:
**17.12.2025 Bulletin 2025/51**

(21) Application number: **23933354.5**

(22) Date of filing: **17.04.2023**

(51) International Patent Classification (IPC):
***H01M 50/414*** *(2021.01)* ***H01M 50/417*** *(2021.01)*
***H01M 50/411*** *(2021.01)* ***H01M 50/409*** *(2021.01)*
***H01M 50/40*** *(2021.01)*

(52) Cooperative Patent Classification (CPC):
Y02E 60/10

(86) International application number:
**PCT/CN2023/088803**

(87) International publication number:
**WO 2024/216474 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **PENG, Lin**
  **Ningde, Fujian 352100 (CN)**
- **PENG, Shuangjuan**
  **Ningde, Fujian 352100 (CN)**
- **LI, Baiqing**
  **Ningde, Fujian 352100 (CN)**
- **JIN, Haizu**
  **Ningde, Fujian 352100 (CN)**
- **ZHAO, Fenggang**
  **Ningde, Fujian 352100 (CN)**

(74) Representative: **Gong, Jinping**
**CocreateIP**
**Neumarkter Straße 21**
**81673 München (DE)**

# (54) SEPARATOR, BATTERY CELL, BATTERY, AND ELECTRIC DEVICE

(57) A separator, a battery cell (5), a battery, and an electric device (6). The separator comprises a liquid retention polymer, and the separator satisfies the following formula: $(m_2\text{-}M)/(m_1\text{-}M) \geq 25\%$, wherein M represents the mass of the electrolyte not absorbed by the separator, and the unit thereof is g; $m_1$ represents the mass of the separator weighed under an ambient pressure after having been immersed in the electrolyte for 2 h, and the unit thereof is g; and $m_2$ represents the mass of the separator weighed under a pressure of 10,000 N in the ambient pressure after having been immersed in the electrolyte for 2 h, and the unit thereof is g.

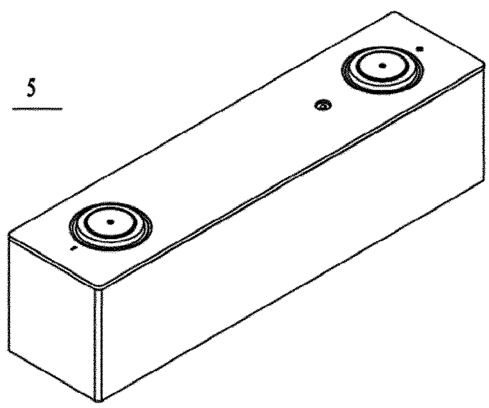


FIG. 1



Processed by Luminess, 75001 PARIS (FR)

## Description

### TECHNICAL FIELD

The present application relates to the field of batteries, and specifically to a separator, a battery cell, a battery, and an electrical apparatus.

### BACKGROUND

Characterized by a high capacity, a long life, and the like, battery cells are widely used in electronic devices, such as a mobile phone, a laptop, a battery cart, an electric vehicle, an electric plane, an electric ship, an electric toy car, an electric toy ship, an electric toy plane, and an electric tool.

As the application range of batteries becomes more and more extensive, gradually severe performance requirements of the battery cells are presented. However, at present, the battery cells have poor cycling performance, and still need to be further improved.

### SUMMARY OF THE INVENTION

In view of the above issues, an object of embodiments of the present application is to provide a separator, a battery cell, a battery, and an electrical apparatus.

In a first aspect of the present application, a separator is provided, comprising a liquid-retaining polymer,

wherein the separator satisfies:

$$\frac{m_2 - M}{m_1 - M} \geq 25\%$$

wherein M represents mass (g) of the separator without absorbing an electrolyte solution;
$m_1$ represents mass (g) of the separator weighed under an ambient pressure after being impregnated with the electrolyte solution for 2 h; and
$m_2$ represents mass (g) of the separator weighed under a pressure of 10,000 N in the ambient pressure after being impregnated with the electrolyte solution for 2 h.

The separator in an embodiment of the present application comprises the liquid-retaining polymer. The separator comprises the liquid-retaining polymer. The separator has a strong liquid-retaining capacity. In cyclic charge-discharge processes of a battery cell, the electrolyte solution can hardly be extruded, thereby reducing the liquid shortage in the cyclic charge-discharge processes, reducing the battery polarization, and improving the cycling performance of the battery cell.

In some embodiments, the separator satisfies:

$$\frac{m_2 - M}{m_1 - M} \geq 30\%.$$

Therefore, when the separator in the embodiment of the present application satisfies the above conditions, its liquid-retaining capacity can be further improved, thereby further reducing the liquid shortage in the cyclic charge-discharge processes, reducing the battery polarization, and improving the cycling performance of the battery cell.

In some embodiments, the separator satisfies:

$$88\% \leq \frac{m_1 - M}{\mathrm{M}} \times 100\% \leq 300\%.$$

Therefore, when the separator in the embodiment of the present application satisfies the above conditions, its liquid-absorbing capacity can be further improved, thereby further reducing the liquid shortage in the cyclic charge-discharge processes, reducing the battery polarization, and improving the cycling performance of the battery cell.

In some embodiments, the separator satisfies:

$$22.5\% \leq \frac{m_2 - M}{\mathrm{M}} \times 100\% \leq 300\%.$$

Therefore, when satisfying the above conditions, the separator in the embodiment of the present application still has a good liquid-retaining capacity under a pressurized condition, thereby further reducing the liquid shortage in the cyclic charge-discharge processes, reducing the battery polarization, and improving the cycling performance of the battery cell.

In some embodiments, the liquid-retaining polymer comprises a fluorinated polymer.

Optionally, crystallinity of the fluorinated polymer measured by differential scanning calorimetry is $Xc_1$, $0<Xc_1\leq30\%$; and melting temperature (°C) of the fluorinated polymer is $T_{m1}$, $0<T_{m1}\leq140$.

In some embodiments, glass transition temperature (°C) of the fluorinated polymer is $T_{g1}$, $-150\leq T_{g1}\leq60$.

In some embodiments, the fluorinated polymer comprises at least one of a structural unit represented by formula (AI) to a structural unit represented by formula (AIII),

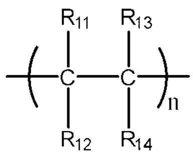 formula (AI), 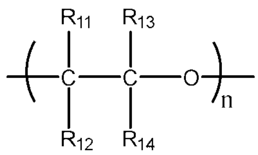 formula (AII),

in the formulas (AI) and (AII), $R_{11}$, $R_{12}$, $R_{13}$, and $R_{14}$ each independently comprise a hydrogen atom, a fluorine atom, a bromine atom, a substituted or unsubstituted C1-C3 alkyl, or a substituted or unsubstituted C1-C3 alkoxy, and at least one of the $R_{11}$, the $R_{12}$, the $R_{13}$, and the $R_{14}$ comprises a fluorine atom; and

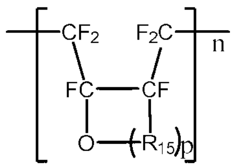 formula (AIII);

in the formula (AIII),

$R_{15}$ comprises a single bond or a substituted or unsubstituted C1-C3 alkyl; p is selected from a positive integer of 1 to 3; and n is selected from a positive integer of 1,000 to 30,000.

In some embodiments, the liquid-retaining polymer further comprises an ether polymer, wherein the ether polymer is made into a sheet structure; the sheet structure is subjected to a dynamic frequency scanning test at $(T_{m2}+20)$°C to obtain an elastic modulus G'-energy consumption modulus G" curve, slope of the elastic modulus G'-energy consumption modulus G" curve is $K_1$, $1<K_1<\infty$, $T_{m2}$°C represents melting temperature of the ether polymer; optionally, $1<K_1\leq100$; and further optionally, $1<K_1\leq10$.

In some embodiments, the liquid-retaining polymer comprises the ether polymer.

Optionally, the ether polymer comprises a structural unit represented by formula (BI) and/or a structural unit represented by formula (BII),

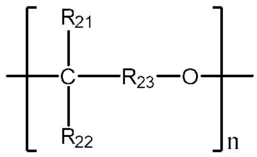 formula (BI);

in the formula (BI), $R_{21}$ and $R_{22}$ each independently comprise a hydrogen atom, a substituted or unsubstituted C1-C3 alkyl, or a substituted or unsubstituted C1-C3 alkoxy; and $R_{23}$ comprises a substituted or unsubstituted C1-C5 alkylene; and

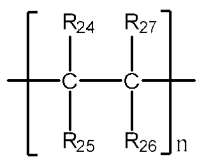 formula (BII);

in the formula (BII), $R_{24}$ to $R_{27}$ each independently comprise a hydrogen atom, a substituted or unsubstituted C1-C3

alkyl, or a substituted or unsubstituted C1-C3 alkoxy or ether radical, and at least one of the $R_{24}$ to the $R_{27}$ comprises a substituted or unsubstituted C1-C3 alkoxy or ether radical.

In some embodiments, the liquid-retaining polymer comprises an ester polymer.

Optionally, the ester polymer is made into a sheet structure; the sheet structure is subjected to a dynamic frequency scanning test at $(T_{m3}+20)$°C to obtain an elastic modulus G'-energy consumption modulus G" curve, slope of the elastic modulus G'-energy consumption modulus G" curve is $K_2$, $1<K_2<\infty$, $T_{m3}$°C represents melting temperature of the ester polymer; optionally, $1<K_2\leq 100$; and further optionally, $1<K_2\leq 10$.

In some embodiments, the ester polymer comprises a structural unit represented by formula (CI) and/or a structural unit represented by formula (CII),

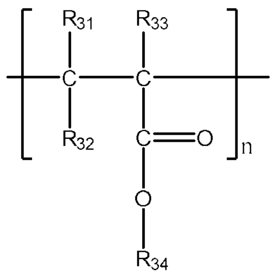
formula (CI);

in the formula (CI), $R_{31}$, $R_{32}$, and $R_{33}$ each independently comprise a hydrogen atom or a substituted or unsubstituted C1-C8 alkyl; and $R_{34}$ comprises a substituted or unsubstituted C1-C8 alkyl or a substituted or unsubstituted C1-C8 hydroxyalkyl; and

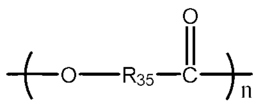
formula (CII);

in the formula (CII), $R_{35}$ comprises a substituted or unsubstituted C2-C6 methylene; and optionally, the $R_{35}$ each independently comprises a substituted or unsubstituted C2-C4 methylene.

In some embodiments, the liquid-retaining polymer comprises an aldehyde-ketone polymer.

Optionally, the aldehyde-ketone polymer is made into a sheet structure; the sheet structure is subjected to a dynamic frequency scanning test at $(T_{m4}+20)$°C to obtain an elastic modulus G'-energy consumption modulus G" curve, slope of the elastic modulus G'-energy consumption modulus G" curve is $K_3$, $0.8\leq K_3<\infty$, $T_{m4}$°C represents melting temperature of the aldehyde-ketone polymer; optionally, $0.8\leq K_3\leq 100$; and further optionally, $0.8\leq K_3\leq 10$.

In some embodiments, the aldehyde-ketone polymer comprises a structural unit represented by formula (DI) and/or a structural unit represented by formula (DII),

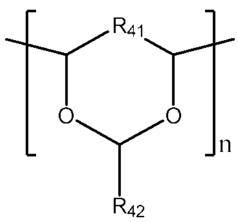
formula (DI);

in the formula (DI), $R_{41}$ comprises a single bond, a substituted or unsubstituted C1-C6 methylene; and $R_{42}$ comprises a hydrogen atom or a substituted or unsubstituted C1-C6 alkyl; and

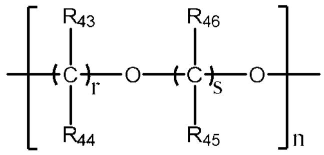

formula (DII);

in the formula (DII), $R_{43}$ to $R_{46}$ each independently comprise a hydrogen atom, a hydroxyl, a substituted or unsubstituted C1-C3 alkyl, a substituted or unsubstituted C1-C3 hydroxyalkyl, or a substituted or unsubstituted C1-C3 alkoxy; r and s are each independently selected from an integer of 0 to 5, and at least one of r and s is selected from a positive integer.

In some embodiments, molecular weight of the liquid-retaining polymer is $1.2\times10^5$ g/mol to $1.0\times10^6$ g/mol. When the molecular weight of the polymer is within the above range, the polymerization can have an excellent liquid-retaining capacity, which is thus conductive to improving the liquid-retaining capacity of the separator.

In some embodiments, the separator body comprises a substrate, and the polymer layer is arranged on at least one surface of the substrate.

In some embodiments, the separator comprises a porous substrate, and the liquid-retaining polymer is distributed in pores of the porous substrate.

In some embodiments, the separator comprises the porous substrate and the polymer layer arranged on at least one surface of the porous substrate, the polymer layer comprising the liquid-retaining polymer.

In some embodiments, coating weight of the liquid-retaining polymer is 0.5 mg/1540.25 $mm^2$ to 5 mg/1540.25 mm2. The coating weight within the above range can further improve the liquid-retaining capacity of the separator.

In a second aspect, the present application presents a battery cell, comprising the separator according to any one embodiment in the first aspect of the present application.

In a third aspect, the present application presents a battery, comprising the battery cell according to any embodiment in the second aspect of the present application.

In a fourth aspect, the present application presents an electrical apparatus, comprising the battery according to any one embodiment in the third aspect of the present application.

## DESCRIPTION OF DRAWINGS

In order to more clearly illustrate technical solutions of embodiments of the present application, drawings to be used in the embodiments of the present application are briefly introduced below. Obviously, the drawings described below are only some embodiments of the present application. For those of ordinary skills in the art, other drawings may also be obtained according to the drawings without creative work.

FIG. 1 is a schematic diagram of an embodiment of a battery cell of the present application.
FIG. 2 is a schematic exploded view of the embodiment of the battery cell in FIG. 1;
FIG. 3 is a schematic view of an embodiment of a battery module of the present application;
FIG. 4 is a schematic view of an embodiment of a battery pack of the present application;
FIG. 5 is a schematic exploded view of the embodiment of the battery pack as shown in FIG. 4; and
FIG. 6 is a schematic diagram of an embodiment of an electrical apparatus comprising the battery cell of the present application as a power source.

The figures may not be drawn to the actual scale.

Description of reference numerals:

1, Battery pack; 2, Upper box; 3, Lower box; 4, Battery module;
5, Battery cell; 51, Case; 52, Electrode assembly;
53, Cover plate;
6, Electrical apparatus.

## DETAILED DESCRIPTION

Embodiments of a separator, a battery cell, a battery, and an electrical apparatus of the present application are specifically disclosed below. However, there may be cases where unnecessary detailed descriptions are omitted. For example, there are cases where detailed descriptions of well-known items and repeated descriptions of actually identical

structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions. Unless otherwise specified, all technical features and optional technical features of the present application may be combined with each other to form new technical solutions.

If not specifically stated, all steps of the present application may be performed sequentially or randomly, preferably sequentially. For example, a method includes steps (a) and (b), meaning that the method may include steps (a) and (b) performed sequentially, or may include steps (b) and (a) performed sequentially. For example, the reference to the fact that the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, "including" and "containing" mentioned in the present application may be openended, or may be closed-ended. For example, "including" and "containing" may indicate that it is possible to include or contain other components not listed, and it is also possible to include or contain only the listed components.

If not specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

The "plurality" mentioned in the present application refers to two or more than two.

The term "alkyl" encompasses straight and branched alkyls. For example, the alkyl may be a C1-C5 alkyl, a C1-C4 alkyl, a C1-C3 alkyl, or a C1-C2 alkyl. In some embodiments, the alkyl comprises, e.g., methyl, ethyl, propyl, isopropyl, butyl, or isobutyl. In addition, the alkyl may be optionally substituted. When the alkyl is substituted, the substituent comprises a fluorine atom.

The term "alkoxy" refers to a radical linking an alkyl to an oxygen atom by a single bond. For example, the alkoxy may be a $C_1$ to $C_5$ alkoxy, a $C_1$ to $C_3$ alkoxy, or a $C_1$ to $C_2$ alkoxy. In some embodiments, the alkoxy may comprise methoxy, ethoxy, or propoxy. In addition, the alkoxy may be optionally substituted.

The term "halogen atom" refers to, e.g., a fluorine atom, a chlorine atom, or a bromine atom.

The term "hydrogen" refers to 1H (protium, H), 2H (deuterium, D), or 3H (tritium, T). In various embodiments, the "hydrogen" may be 1H (protium, H).

The battery cell comprises a positive electrode plate, a negative electrode plate, a separator, and an electrolyte solution. The separator is located between the positive electrode plate and the negative electrode plate, to separate the positive electrode plate from the negative electrode plate. In a charge-discharge cycle of the battery cell, an electrode assembly will expand in volume, and particularly, the expansion force is high in the later cycle stage of the battery cell, so that the electrolyte solution is extruded, and the electrode plates have high risks of liquid shortage and bridge breaking, thereby resulting in a high risk of occurrence of metal dendrite precipitation, which may deteriorate the cycling performance of the battery cell and shorten the cycle life of the battery cell.

In view of the above problems, an embodiment of the present application presents a separator, comprising a liquid-retaining polymer. The separator has a strong liquid-retaining capacity. In cyclic charge-discharge processes of a battery cell, the electrolyte solution can hardly be extruded, thereby reducing the liquid shortage in the cyclic charge-discharge processes, reducing the battery polarization, and improving the cycling performance of the battery cell.

## Separator

In a first aspect, an embodiment of the present application presents a separator, comprising a liquid-retaining polymer, wherein the liquid-retaining polymer comprises at least one of liquid-retaining polymers; and the separator

satisfies:

$$\frac{m_2-M}{m_1-M} \geq 25\%;$$

wherein M represents (g);
$m_1$ represents mass (g) of the separator weighed under an ambient pressure after being impregnated with the electrolyte solution for 2 h; and
$m_2$ represents mass (g) of the separator weighed under a pressure of 10,000 N in the ambient pressure after being impregnated with the electrolyte solution for 2 h.

During specific calculations using the above formulas, only specific values are substituted for calculations, without substituting the units of the parameters. $\frac{m_2-M}{m_1-M}$ may be defined as the liquid-retaining capacity A.

The separator in an embodiment of the present application comprises the liquid-retaining polymer. The separator comprises the liquid-retaining polymer. The separator has a strong liquid-retaining capacity. In cyclic charge-discharge processes of a battery cell, the electrolyte solution can hardly be extruded, thereby reducing the liquid shortage in the cyclic charge-discharge processes, reducing the risk of metal dendrite precipitation in the battery cell, and improving the cycling performance of the battery cell.

The separator may be made of a substrate and the liquid-retaining polymer. Alternatively, the separator is derived from the battery cell by disassembling the battery cell, taking out the separator impregnated with the electrolyte solution in the battery cell, washing the separator with deionized water, and then vacuum drying at 80°C for 12 h to obtain the said separator, which is used for separator tests such as mass weighing, liquid absorption rate, and porosity.

M represents mass (g) of the separator without absorbing the electrolyte solution, and may also be understood as the mass of the separator itself. Specifically, the separator may be cut into 10 wafers of 1540.25 $mm^2$, and weighed in an electronic balance to obtain the mass thereof.

$m_1$ represents the mass of the separator weighed under the ambient pressure after being impregnated with the electrolyte solution for 2 h. Specifically, the separator may be cut into 10 wafers of 1540.25 $mm^2$. After the wafers are impregnated with the electrolyte solution for 2 h, the wafers are taken out, and suspended under the ambient pressure for 2 min to weigh the mass thereof.

$m_2$ represents the mass of the separator weighed under an acting force of 10,000 N in the ambient pressure after being impregnated with the electrolyte solution for 2 h. Specifically, the separator may be cut into 10 wafers of 1540.25 $mm^2$. After the wafers are impregnated with the electrolyte solution for 2 h, the wafers are taken out, stacked successively, and weighed to obtain the mass thereof after the acting force of 10,000 N is applied thereon under the ambient pressure.

In the present application, a standard electrolyte solution is used as a test sample for testing. The formula of the electrolyte solution in the embodiments may be referred to for specific formula of the electrolyte solution. For example, the electrolyte solution comprises ethylene carbonate (EC), ethyl methyl carbonate (EMC), and dimethyl carbonate (DMC) at a volume ratio of 1:1:1, and the electrolyte solution further comprises lithium hexafluorophosphate ($LiPF_6$) at a molar concentration of 1 mol/L.

Optionally,

$$\frac{m_2-M}{m_1-M} \geq 30\%.$$

When the separator satisfies the above conditions, the separator has a strong liquid-absorbing capacity and a strong liquid-retaining capacity, thereby reducing the liquid shortage in the cyclic charge-discharge processes, reducing the battery polarization, and improving the cycling performance of the battery cell.

As an example, $\frac{m_2-M}{m_1-M}$ may be:

25.1%, 25.5%, 26%, 26.5%, 27%, 27.5%, 28%, 28.5%, 29%, 29.5%, 30%, 30.5%, 31%, 31.5%, 32%, 32.5%, 33%, 33.5%, 34%, 34.5%, 36%, 36.5%, 37%, 37.5%, 38%, 39%, 40%, 41%, 42%, 45%, 46%, 48%, 50%, 52%, 55%, 60%, 62%, 65%, 68%, 70%, 72%, 75%, 78%, 80%, 82%, 85%, 88%, 90%, 92%, 95%, 96%, 97%, 98%, 99%, or a range consisting of any two of the above values.

In some embodiments, the separator satisfies:

$$88\% \leq \frac{m_1 - M}{\mathrm{M}} \times 100\% \leq 300\%.$$

$m_1$-M represents a ratio of an amount of liquid absorbed by the separator to the mass of the separator itself, and

can represent the liquid-absorbing capacity of the separator, that is, the amount of absorbed electrolyte solution, and its liquid-retaining capacity can also be relatively improved. $\frac{m_1-M}{M}\times 100\%$ may be defined as the liquid retention rate of the separator.

When the separator satisfies the above conditions, the separator has a relatively good liquid-absorbing capacity, which is conductive to improving the absorption rate of the electrolyte solution, thereby further improving the cycling performance of the battery cell.

As an example, $\frac{m_1-M}{M}\times 100\%$ may be:

88%, 90%, 92%, 95%, 96%, 97%, 98%, 99%, 100%, 105%, 110%, 120%, 130%, 140%, 150%, 160%, 170%, 180%, 190%, 200%, 210%, 220%, 230%, 240%, 250%, 260%, 270%, 280%, 290%, 300%, or a range consisting of any two of the above values.

In some embodiments, the separator satisfies:

$$22.5\% \leq \frac{m_2 - M}{M} \times 100\% \leq 300\%.$$

$(m_2\text{-}M)/M$ represents a ratio of an amount of liquid retained by the separator under an external action to the mass of the separator itself, and can represent the liquid-retaining capacity of the separator after pressurization. $\frac{m_2-M}{M}\times 100\%$ may be defined as the liquid retention rate of the separator after pressurization.

When the separator satisfies the above conditions, the separator has a relatively good liquid-retaining capacity, and the electrolyte solution absorbed by the separator can hardly be extruded, thereby improving the migration rate of active ions, and further improving the cycling performance of the battery cell.

As an example, $\frac{m_2-M}{M}\times 100\%$ may be:

22.5%, 25.1%, 25.5%, 26%, 26.5%, 27%, 27.5%, 28%, 28.5%, 29%, 29.5%, 30%, 30.5%, 31%, 31.5%, 32%, 32.5%, 33%, 33.5%, 34%, 34.5%, 36%, 36.5%, 37%, 37.5%, 38%, 39%, 40%, 41%, 42%, 45%, 46%, 48%, 50%, 52%, 55%, 60%, 62%, 65%, 68%, 70%, 72%, 75%, 78%, 80%, 82%, 85%, 88%, 90%, 92%, 95%, 96%, 97%, 98%, 99%, 100%, 105%, 110%, 120%, 130%, 140%, 150%, 160%, 170%, 180%, 190%, 200%, 210%, 220%, 230%, 240%, 250%, 260%, 270%, 280%, 290%, 300%, or a range consisting of any two of the above values.

The liquid-retaining polymer may be selected from at least one of a fluorinated polymer, an ether polymer, an ester polymer, and an aldehyde-ketone polymer.

In some embodiments, the liquid-retaining polymer comprises a fluorinated polymer, crystallinity of the fluorinated polymer measured by differential scanning calorimetry is $X_{C1}$, $0<X_{C1}\leq 30\%$; and melting temperature (°C) of the fluorinated polymer is $T_{m1}$, $0<Tm_1\leq 140$.

Crystallization refers to a process in which atoms, ions, or molecules in a material are arranged in a certain spatial order to form an orderly state. The conformation of the polymer in the crystallization depends on both intramolecular and intermolecular factors, and the intermolecular force will affect the stacking density between molecular chains. The crystallinity $X_{C1}$ is used to represent the degree of crystallinity in the material, and may be measured by differential scanning calorimetry (DSC). Specifically, the test steps are: 0.5 g to 0.8 g of sample is taken, placed in a carrier crucible, and cooled/heated in a nitrogen atmosphere, wherein the sample is heated from an initial temperature that is 20°C lower than intrinsic $T_{g1}$ of the material to a cutoff temperature that is 20°C higher than intrinsic $T_{m1}$ of the material at a heating rate of 10°C/min, and actual glass transition temperature $T_{g1}$ and melting temperature $T_{m1}$ of the material are determined based on endothermic and exothermic peak values or transition points of the material in the process.

Therefore, the fluorinated polymer has a relatively low crystallinity and a relatively low melting temperature, so that molecular chains tend to be loosely arranged with small interaction forces between the molecular chains, adjacent molecular chains can easily despiralize, and chain segment movement is realized through intermolecular internal rotation, thus forming a highly flexible molecular chain structure. Moreover, the fluorinated polymer and the electrolyte solution in the battery cell can form a gelatinous substance to improve the cycling performance of the battery cell.

As an example, the crystallinity $X_{C1}$ of the fluorinated polymer measured by differential scanning calorimetry may be 5%, 10%, 15%, 20%, 25%, 30%, or a range consisting of any two of the above values.

As an example, the melting temperature of the fluorinated polymer may be 10°C, 20°C, 50°C, 70°C, 90°C, 100°C, 120°C, 140°C, or a range consisting of any two of the above values.

In some embodiments, glass transition temperature (°C) of the fluorinated polymer is $T_{g1}$, $-150\leq T_{g1}\leq 60$.

The glass transition temperature is the transition temperature from freezing to movement of the polymer chain segment. The glass transition temperature has a certain influence on the flexibility of the molecular chain of the polymer. The lower the glass transition temperature is, the better the flexibility of the molecular chain of the polymer is at room temperature. The higher the glass transition temperature is, the worse the flexibility of the molecular chain is at room

temperature. The glass transition temperature may be measured by differential scanning calorimetry (DSC). The glass transition temperature of the polymer is relatively low, the flexibility of the molecular chain segment is better, and the adjacent molecular chains can more easily despiralize. As an example, the glass transition temperature of the fluorinated polymer may be -150°C, -120°C, -100°C, -80°C, -60°C, -30°C, 0°C, 30°C, 60°C, or a range consisting of any two of the above values.

In some embodiments, the fluorinated polymer comprises a structural unit represented by formula (AI),

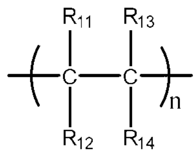
formula (AI);

and in the formula (AI), $R_{11}$, $R_{12}$, $R_{13}$, and $R_{14}$ each independently comprise a hydrogen atom, a fluorine atom, a bromine atom, a substituted or unsubstituted C1-C3 alkyl, or a substituted or unsubstituted C1-C3 alkoxy, and at least one of the $R_{11}$, the $R_{12}$, the $R_{13}$, and the $R_{14}$ comprises a fluorine atom.

In some embodiments, the fluorinated polymer comprises a structural unit represented by formula (AII), and

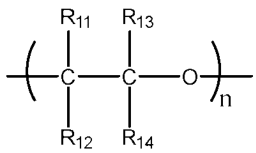
formula (AII);

in the formulas (AI) and (AII), $R_{11}$, $R_{12}$, $R_{13}$, and $R_{14}$ each independently comprise a hydrogen atom, a fluorine atom, a bromine atom, a substituted or unsubstituted C1-C3 alkyl, or a substituted or unsubstituted C1-C3 alkoxy, and at least one of the $R_{11}$, the $R_{12}$, the $R_{13}$, and the $R_{14}$ comprises a fluorine atom.

In some embodiments, the fluorinated polymer comprises a structural unit represented by formula (AII), and

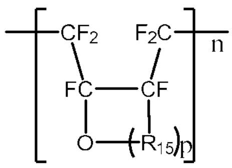
formula (AIII);

in the formula (AIII), $R_{15}$ comprises a single bond or a substituted or unsubstituted C1-C3 alkyl.

The above polymer is merely an example of a structural radical of the main molecular chain. In the embodiments of the present application, the polymer may also be obtained by copolymerizing the above structural radical with structural radicals of other types (for example, structural units such as an olefin structural unit, an ester monomer, a nitrile monomer, or an amide monomer).

When the above radical is substituted, the substituent may comprise one or more of a nitrile radical (-CN), a nitro, a sulfo, a sulfonyl, an amide, a carboxyl, an ester radical, or a halogen atom (for example, a chlorine atom, a fluorine atom, or a bromine atom). The above substituent is a high-pressure resistant substituent, and is more conducive to stabilizing the polymer structure.

In some embodiments, p is selected from a positive integer of 1 to 3.

In some embodiments, polymerization degree n of the fluorinated polymer is selected from a positive integer of 1,000 to 30,000.

In some embodiments, $R_{11}$, $R_{12}$, $R_{13}$ and $R_{14}$ each independently comprise a hydrogen atom, a fluorine atom, a bromine atom, a substituted or unsubstituted C1-C2 alkyl, or a substituted or unsubstituted C1-C2 alkoxy; and further optionally, the $R_{11}$, the $R_{12}$, the $R_{13}$, and the $R_{14}$ each independently comprise a hydrogen atom, a fluorine atom, a chlorine atom, a methyl, a fluoromethyl, a methoxy, or a perfluoromethoxy.

In some embodiments, the fluorinated polymer comprises at least one of a structural unit represented by formula (AI-1) to a structural unit represented by formula (AI-11),

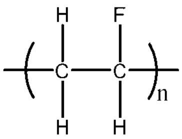 formula (AI-1), 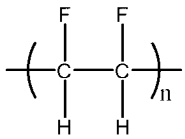 formula (AI-2), 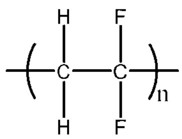 formula (AI-3),

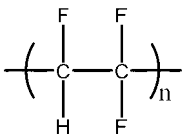 formula (AI-4), 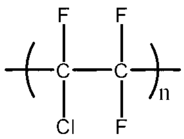 formula (AI-5), 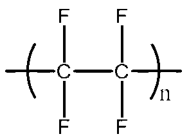 formula (AI-6),

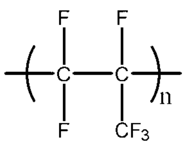 formula (AI-7), 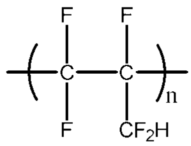 formula (AI-8), 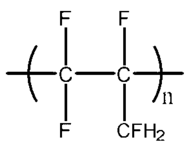 formula (AI-9),

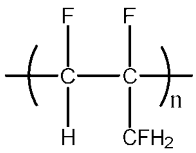 formula (AI-10), or 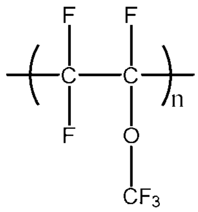 formula (AI-11).

In some embodiments, the fluorinated polymer comprises at least one of a structural unit represented by formula (AII-1) to a structural unit represented by formula (AII-5),

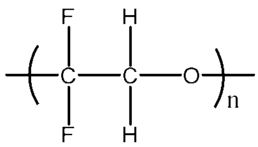 formula (AII-1), 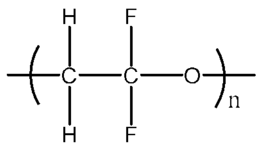 formula (AII-2),

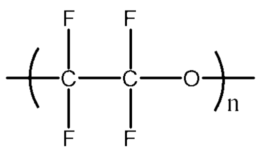 formula (AII-3), 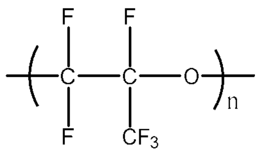 formula (AII-4), or

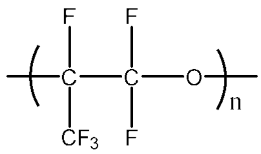 formula (AII-5).

In some embodiments, the fluorinated polymer comprises at least one of a structural unit represented by formula (AIII-1) to a structural unit represented by formula (AIII-3),

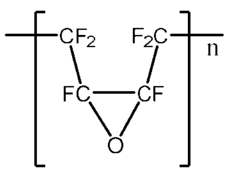 formula (AIII-1), 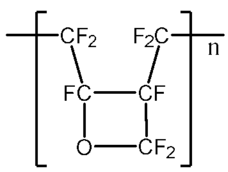 formula (AIII-2), or

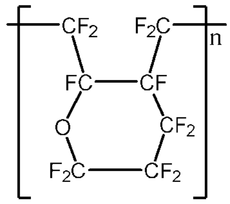

formula (AIII-3).

As an example, the fluorinated polymer comprises one or more of polyperfluoroethylene (PTFE), polyvinylidene fluoride (PVDF), perfluoroethylene-propylene (FEP) copolymer, perfluoroalkoxy (PFA) polymer, perfluoropolyether (PFPE), polyvinylidene fluoride-hexafluoropropylene (PVDF-HFP) copolymer, polyvinylidene fluoride-trifluoroethylene (PVDF-TrFE) copolymer, and perfluoro(1-butenyl vinyl ether) polymer (abbreviated as CYTOP).

As an example, the fluorinated polymer comprises one or more of polytetrafluoroethylene (PTFE), polyvinylidene fluoride (PVDF), perfluoroethylene-propylene (FEP) copolymer, polyvinylidene fluoride-hexafluoropropylene (PVDF-HFP) copolymer, and polyvinylidene fluoride-trifluoroethylene (PVDF-TrFE) copolymer.

The above fluorinated polymer may be derived from one or more of the following monomers: fluorocycloethane, vinyl fluoride, 1,2-difluoroethylene, vinylidene fluoride, trifluoroethylene, chlorotrifluoroethylene, tetrafluoroethylene, hexafluoropropylene, 3,3,3-trifluoropropylene, trifluoropropylene, tetrafluoropropylene, pentafluoropropylene, and the like. Optionally, the above fluorinated polymer may be derived from at least two of the following monomers: fluorocycloethane, vinyl fluoride, 1,2-difluoroethylene, vinylidene fluoride, trifluoroethylene, chlorotrifluoroethylene, tetrafluoroethylene, hexafluoropropylene, 3,3,3-trifluoropropylene, trifluoropropylene, tetrafluoropropylene, and pentafluoropropylene.

The monomers used in the above fluorinated polymer are all short-chain monomers, which are conducive to forming a linear structure or a short-branched structure by polymerization. This structure type has a low degree of entanglement, which is conducive to improving the flexibility of the molecular chain. The molecular chain can fully stretch in the electrolyte solution, thereby facilitating forming a gelatinous substance with a three-dimensional structure from the polymer and the electrolyte solution, which is conducive to further improving the liquid absorption rate.

In some embodiments, the polymerization degree n of the fluorinated polymer is selected from a positive integer of 5,000 to 20,000.

In some embodiments, molecular weight of the fluorinated polymer is $1.2\times10^5$ g/mol to $1.5\times10^6$ g/mol; and optionally $1.2\times10^5$g/mol to $1.0\times10^6$ g/mol. When the molecular weight of the polymer is within the above range, the polymerization can have an excellent liquid-retaining capacity, which is thus conductive to improving the liquid-retaining capacity of the separator.

As an example, the molecular weight of the polymer may be $1.2\times10^5$ g/mol, $2\times10^5$ g/mol, $5\times10^5$ g/mol, $8\times10^5$ g/mol, $1\times10^6$ g/mol, $1.5\times10^6$ g/mol, or a range consisting of any two of the above values.

[Ether polymer]

In some embodiments, the liquid-retaining polymer comprises an ether polymer, the ether polymer is made into a sheet structure; the sheet structure is subjected to a dynamic frequency scanning test at $(T_{m2}+20)$°C to obtain an elastic modulus G'-energy consumption modulus G" curve, slope of the elastic modulus G'-energy consumption modulus G" curve is $K_1$, $1<K_1<\infty$, and $T_{m2}$°C represents melting temperature of the ether polymer.

Specifically, the preparation process of the sheet structure is as follows: the ether polymer is vacuum-dried at 80°C for 12 h. The dried ether polymer is hot pressed by a flat vulcanizing machine into a thin sheet with a calendering thickness of 1-2 min at a hot pressing temperature set to $(T_{m2}+20)$°C under a pressure of 8 MPa for calendering time of 2 min. After being calendered for 2 min, the sample is taken out, and placed on another vulcanizing machine of a same model for cold pressing under a cold pressing pressure of 10 MPa. A round mold with a diameter of 25 mm can be used to obtain a polymer wafer (sheet structure) of a fixed size. As an example, the sheet structure may be a wafer with a thickness of 1-2 mm and a diameter of 25 mm; or may be made into a sample following the sample standard required by the test device.

Based on the conclusion of classical linear viscoelasticity, for a polymer, particularly a linear polymer, the elastic modulus G'-energy consumption modulus G" in an end region (an interval range approaching a maximum angular velocity) of the elastic modulus G'-energy consumption modulus G" curve complies with frequency dependence, and a longest chain of the polymer plays a role in the viscoelastic behavior.

Specific steps of the dynamic frequency scanning test are as follows: The dynamic frequency scanning test is performed using a TA-AR2000EX rotational rheometer (TA Instruments, USA) with parallel plate diameter of 25 mm and thickness of 0.9 mm. To ensure that the test is performed in a linear viscoelastic region, during the dynamic frequency scanning test, the strain is 2%, the test temperature is $T_{m2}$+20°C, and the frequency scanning range of the test is: 500 rad/s$\leq w^2 \leq$0.05 rad/s, so as to acquire data in a lowest possible frequency region.

The dynamic frequency scanning test can be used to characterize the degree of entanglement of molecular chains under solid-phase melting (melt state). Compared with the linear structure or the short-branched structure, a long-branched structure, a network structure, and a low cross-linked structure have a high degree of entanglement, and will show a behavior of deviation from a linear end. The ether polymer shows a solid-phase behavior. The ether polymer of the present application satisfying the above range can further reduce the molecular chain entanglement state, which is conducive to the diffusion of solvent molecules in the electrolyte solution among the molecular chains; and, the ether polymer still maintains a certain molecular chain entanglement state, and can form a gelatinous substance with the electrolyte solution to improve the cycling performance and storage performance of the battery cell.

In some embodiments, $1<K_1\leq100$; and optionally, $1<K_1\leq10$. As an example, the $K_1$ may be 1.01, 1.1, 2, 5, 10, 15, 20, 30, 50, 100, 200, 500, 1,000, 5,000, 10,000, or a range consisting of any two of the above values.

In some embodiments, glass transition temperature (°C) of the ether polymer is $T_{g2}$, $-100\leq T_{g2}\leq50$; and optionally, $-80\leq T_{g2}\leq30$. As an example, the glass transition temperature of the ether polymer may be -100°C, -80°C, -60°C, -30°C, 0°C, 30°C, 50°C, or a range consisting of any two of the above values.

In some embodiments, the ether polymer comprises a structural unit represented by formula (BI), and

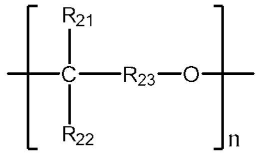
formula (BI);

in the formula (BI), $R_{21}$ and $R_{22}$ each independently comprise a hydrogen atom, a substituted or unsubstituted C1-C3 alkyl, or a substituted or unsubstituted C1-C3 alkoxy; and $R_{23}$ comprises a substituted or unsubstituted C1-C5 methylene.

In some embodiments, the $R_{21}$ and the $R_{22}$ each independently comprise a hydrogen atom or a substituted or unsubstituted C1-C2 alkyl.

In some embodiments, the $R_{23}$ comprises a single bond or a substituted or unsubstituted C1-C4 methylene.

As an example, the ether polymer comprises at least one of a structural unit represented by formula (BI-1) to a structural unit represented by formula (BI-8),

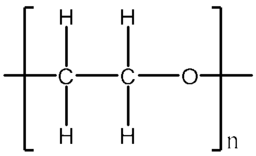
formula (BI-1),

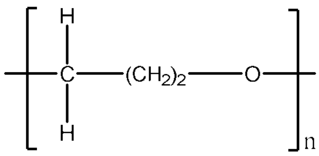
formula (BI-2),

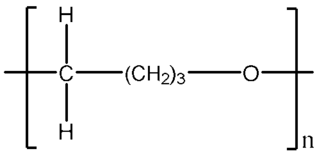
formula (BI-3),

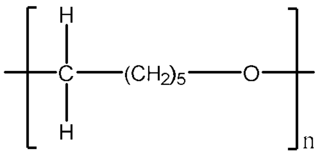
formula (BI-4),

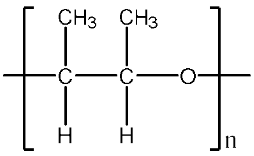
formula (BI-5),

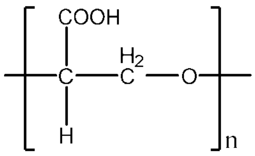
formula (BI-6),

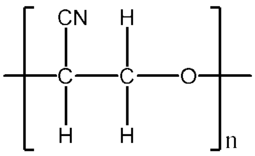
formula (BI-7), or

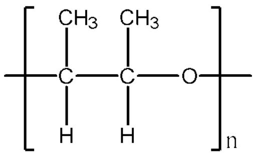
formula (BI-8).

In some embodiments, the ether polymer comprises a structural unit represented by formula (BII), and

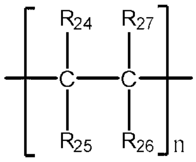
formula (BII);

in the formula (BII), $R_{24}$ to $R_{27}$ each independently comprise a hydrogen atom, a substituted or unsubstituted C1-C3 alkyl, or a substituted or unsubstituted C1-C3 alkoxy or ether radical, and at least one of the $R_{24}$ to the $R_{27}$ comprises a substituted or unsubstituted C1-C3 alkoxy or ether radical.

In some embodiments, $R_{24}$ to $R_{27}$ each independently comprise a hydrogen atom, a substituted or unsubstituted C1-C2 alkyl, a substituted or unsubstituted C1-C2 alkoxy or ether radical, and at least one of the $R_{24}$ to the $R_{27}$ comprises a substituted or unsubstituted C1-C2 alkoxy or ether radical.

In some embodiments, the ether polymer comprises at least one of a structural unit represented by formula (BII-1) to a structural unit represented by formula (BII-7),

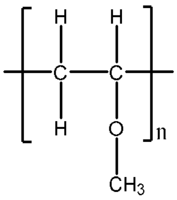
formula (BII-1),

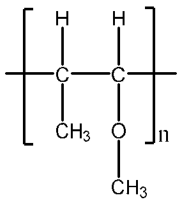
formula (BII-2),

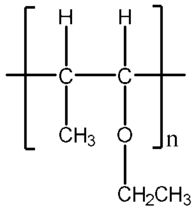
formula (BII-3),

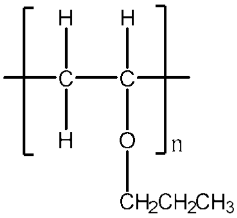
formula (BII-4),

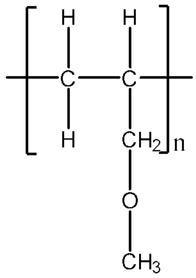
formula (BII-5),

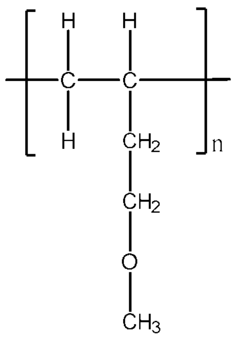
formula (BII-6), or

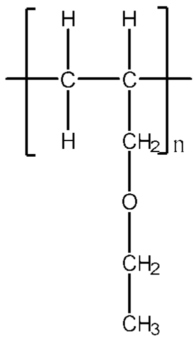
formula (BII-7).

The monomers used in the above ether polymer are all polycyclic, e.g., below hexacyclic, structures or short-chain monomers, which are conducive to forming an -O- structure at a high content by polymerization. This structure type has a low degree of entanglement, which is conducive to improving the flexibility of the molecular chain. The molecular chain can fully stretch in the electrolyte solution, thereby facilitating forming a gelatinous substance with the electrolyte solution, and improving the cycling performance and storage performance of the battery cell.

The above polymer is merely an example of a structural radical of the main molecular chain. In the embodiments of the present application, the polymer may also be obtained by copolymerizing the above structural radical with structural radicals of other types (for example, structural units such as an olefin structural unit, an ester monomer, a nitrile monomer, or an amide monomer).

When the above radical is substituted, the substituent may comprise one or more of a nitrile radical (-CN), a nitro, a sulfo, a sulfonyl, an amide, a carboxyl, an ester radical, or a halogen atom (for example, a chlorine atom, a fluorine atom,

or a bromine atom). The above substituent is a high-pressure resistant substituent, and is more conducive to stabilizing the polymer structure.

In some embodiments, the polymerization degree n of the ether polymer is selected from a positive integer of 1,500 to 25,000.

Optionally, the polymerization degree n of the ether polymer is selected from a positive integer of 3,000 to 18,000.

In some embodiments, molecular weight of the polymer is $1.2\times10^5$ g/mol to $1.0\times10^6$ g/mol.

As an example, the molecular weight of the polymer may be $1.2\times10^5$ g/mol, $2\times10^5$ g/mol, $5\times10^5$ g/mol, $8\times10^5$ g/mol, $1\times10^6$ g/mol, or a range consisting of any two of the above values.

[Ester polymer]

In some embodiments, the liquid-retaining polymer comprises an ester polymer, wherein the ester polymer is made into a sheet structure; the sheet structure is subjected to a dynamic frequency scanning test at $(T_{m3}+20)$°C to obtain an elastic modulus G'-energy consumption modulus G" curve, slope of the elastic modulus G'-energy consumption modulus G" curve is $K_2$, $1<K_2<\infty$, and $T_{m3}$°C represents melting temperature of the ester polymer.

The ester polymer in an embodiment of the present application satisfying the above range can further reduce the molecular chain entanglement state, which is conducive to the diffusion of solvent molecules in the electrolyte solution among the molecular chains; and, the ether polymer still maintains a certain molecular chain entanglement state, and can form a gelatinous substance with the electrolyte solution to improve the liquid absorption rate, thereby improving the cycling performance and storage performance of the battery cell.

In some embodiments, $1<K_2\leq100$; and optionally, $1<K_2\leq10$.

As an example, the $K_2$ may be 1.01, 1.1, 1.2, 1.5, 2, 5, 10, 15, 20, 30, 50, 100, 200, 500, 1,000, 5,000, 10,000, or a range consisting of any two of the above values.

In some embodiments, glass transition temperature (°C) of the ester polymer is $T_{g3}$, $-100\leq T_g\leq50$; and optionally, $-80\leq T_{g3}\leq30$.

As an example, the glass transition temperature of the ester polymer may be -100°C, -90°C, -80°C, -60°C, -30°C, 0°C, 30°C, 50°C, or a range consisting of any two of the above values.

In some embodiments, the ester polymer comprises a structural unit represented by formula (CI), and

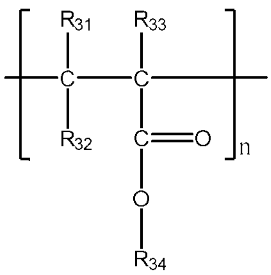
formula (CI);

in the formula (CI), $R_{31}$, $R_{32}$, and $R_{33}$ each independently comprise a hydrogen atom or a substituted or unsubstituted C1-C8 alkyl; $R_{34}$ comprises a substituted or unsubstituted C1-C8 alkyl or a substituted or unsubstituted C1-C8 hydroxyalkyl; and optionally, the $R_{34}$ comprises a substituted or unsubstituted C1-C6 alkyl or a substituted or unsubstituted C1-C6 hydroxyalkyl.

Optionally, the $R_{31}$ comprises a hydrogen atom or a substituted or unsubstituted methyl.

Optionally, the $R_{32}$ and the $R_{33}$ each independently comprise a hydrogen atom.

Optionally, the $R_{34}$ comprises a substituted or unsubstituted C1-C4 alkyl or a substituted or unsubstituted C1-C4 hydroxyalkyl.

As an example, the ester polymer comprises at least one of a structural unit represented by formula (CI-1) to a structural unit represented by formula (CI-15),

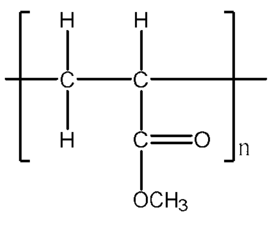
formula (CI-1),
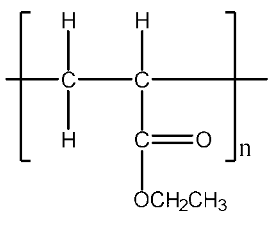
formula (CI-2),

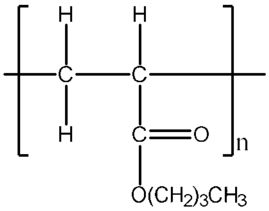
formula (CI-3),

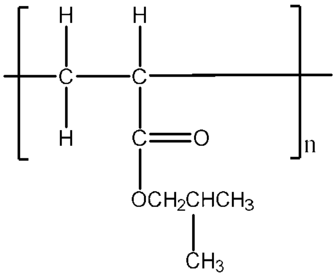
formula (CI-4),

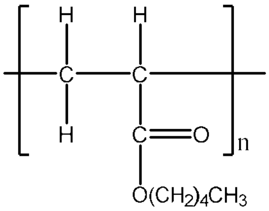
formula (CI-5),

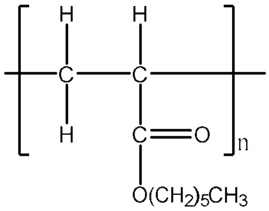
formula (CI-6),

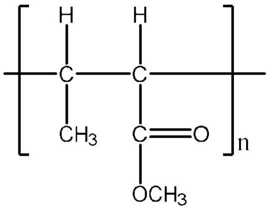
formula (CI-7),

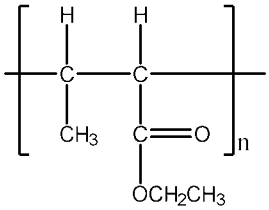
formula (CI-8),

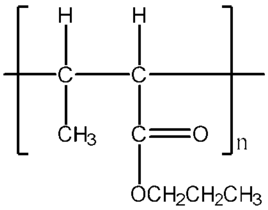
formula (CI-9),

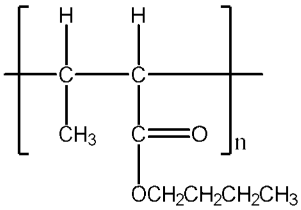
formula (CI-10),

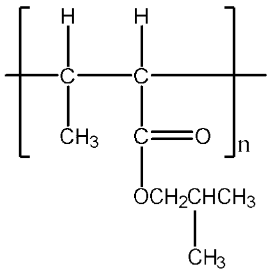
formula (CI-11),

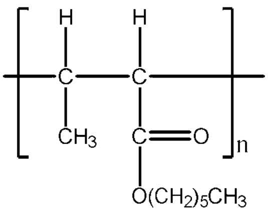
formula (CI-12),

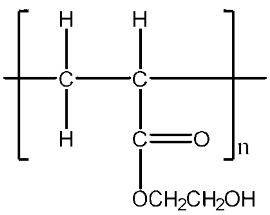
formula (CI-13),

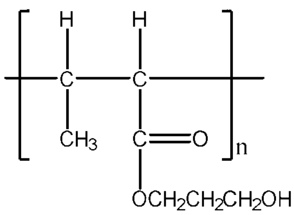
formula (CI-14), or

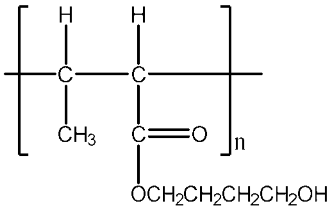
formula (CI-15).

In some embodiments, the ester polymer comprises a structural unit represented by formula (CII), and

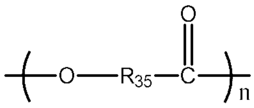
formula (CII);

in the formula (CII), $R_{35}$ comprises a substituted or unsubstituted C2-C6 methylene.

Optionally, the $R_{35}$ each independently comprises a substituted or unsubstituted C2-C4 methylene.

As an example, the ester polymer comprises at least one of a structural unit represented by formula (CII-1) to a structural unit represented by formula (CII-5),

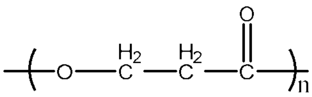
formula (CII-1),
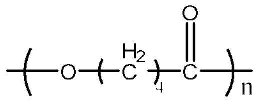
formula (CII-2),

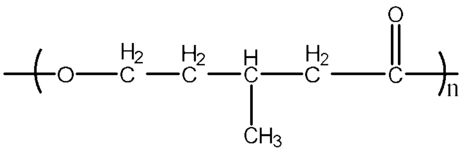
formula (CII-3),
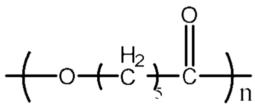
formula (CII-4), or

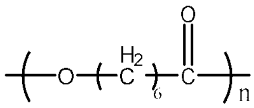
formula (CII-5).

Molecular chain of the above ester polymer has a low degree of entanglement, which is conducive to improving the flexibility of the molecular chain, and the molecular chain can fully stretch in the electrolyte solution, thereby facilitating forming a gelatinous substance with the electrolyte solution.

The above polymer is merely an example of a structural radical of the main molecular chain. In the embodiments of the present application, the polymer may also be obtained by copolymerizing the above structural radical with structural radicals of other types (for example, structural units such as an olefin structural unit, an ester monomer, a nitrile monomer, or an amide monomer).

When the above radical is substituted, the substituent may comprise one or more of a nitrile radical (-CN), a nitro, a sulfo, a sulfonyl, an amide, a carboxyl, an ester radical, or a halogen atom (for example, a chlorine atom, a fluorine atom, or a bromine atom). The above substituent is a high-pressure resistant substituent, and is more conducive to stabilizing the polymer structure.

In some embodiments, polymerization degree n of the ester polymer is selected from a positive integer of 800 to 20,000.

Optionally, the polymerization degree n of the ester polymer is selected from a positive integer of 1,000 to 15,000.

In some embodiments, molecular weight of the ester polymer is $1.2\times10^5$ g/mol to $1.0\times10^6$ g/mol.

As an example, the molecular weight of the ester polymer may be $1.2\times10^5$ g/mol, $2\times10^5$ g/mol, $5\times10^5$ g/mol, $8\times10^5$ g/mol, $1\times10^6$ g/mol, $1.5\times10^6$ g/mol, or a range consisting of any two of the above values.

[Ketone-aldehyde polymer]

In some embodiments, the liquid-retaining polymer comprises an aldehyde-ketone polymer, wherein the

aldehyde-ketone polymer is made into a sheet structure; the sheet structure is subjected to a dynamic frequency scanning test at $(T_{m4}+20)$°C to obtain an elastic modulus G'-energy consumption modulus G" curve, slope of the elastic modulus G'-energy consumption modulus G" curve is $K_3$, $0.8 \le K_3 < \infty$, and $T_{m4}$°C represents melting temperature of the aldehyde-ketone polymer.

In some embodiments, $0.8 \le K_3 \le 100$; and optionally, $0.8 \le K_3 \le 10$.

As an example, the $K_3$ may be 0.8, 0.9, 1, 2, 5, 10, 15, 20, 30, 50, 100, 200, 500, 1,000, 5,000, 10,000, or a range consisting of any two of the above values.

In some embodiments, glass transition temperature (°C) of the aldehyde-ketone polymer is $T_{g4}$, $-100 \le T_{g4} \le 50$; and optionally, $-80 \le T_{g4} \le 30$.

As an example, the glass transition temperature of the aldehyde-ketone polymer may be -100°C, -90°C, -80°C, -60°C, -30°C, 0°C, 30°C, 50°C, or a range consisting of any two of the above values.

In some embodiments, the aldehyde-ketone polymer comprises a structural unit represented by formula (DI),

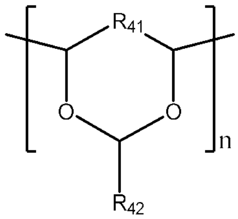
formula (DI);

in the formula (DI), $R_{41}$ comprises a single bond, a substituted or unsubstituted C1-C6 methylene; and $R_{42}$ comprises a hydrogen atom or a substituted or unsubstituted C1-C6 alkyl;
optionally, the $R_{41}$ comprises a single bond or a substituted or unsubstituted C1-C2 methylene; and
optionally, the $R_{42}$ comprises a hydrogen atom or a substituted or unsubstituted C1-C3 alkyl.

In an embodiment of the present application, a single bond means that the radical does not exist, and atoms on both sides of the radical are linked by the single bond. For example, the $R_{41}$ is linked by a single bond, which means that the carbon atoms on both sides of the $R_{41}$ are linked in the form of the single bond.

As an example, the aldehyde-ketone polymer comprises at least one of a structural unit represented by formula (DI-1) to a structural unit represented by formula (DI-6),

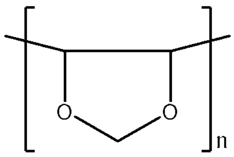
formula (DI-1),
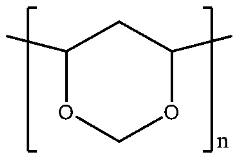
formula (DI-2),

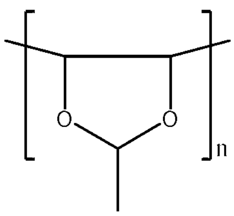
formula (DI-3),
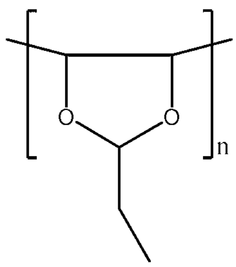
formula (DI-4),

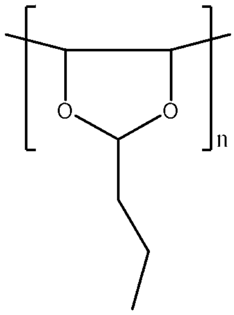 formula (DI-5), or 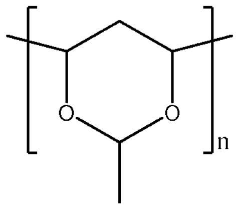 formula (DI-6).

As an example, the aldehyde-ketone polymer comprises a structural unit represented by formula (DII), and

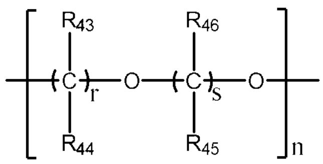 formula (DII);

in the formula (DII), $R_{43}$ to $R_{46}$ each independently comprise a hydrogen atom, a hydroxyl, a substituted or unsubstituted C1-C3 alkyl, a substituted or unsubstituted C1-C3 hydroxyalkyl, or a substituted or unsubstituted C1-C3 alkoxy; r and s are each independently selected from an integer of 0 to 5, and at least one of r and s is selected from a positive integer; and optionally, the $R_{43}$ to the $R_{46}$ each independently comprise a hydrogen atom, a hydroxyl, a substituted or unsubstituted C1-C3 alkyl, a substituted or unsubstituted C1-C2 hydroxyalkyl, or a substituted or unsubstituted C1-C2 alkoxy.

In some embodiments, the aldehyde-ketone polymer comprises at least one of a structural unit represented by formula (DII-1) to a structural unit represented by formula (DII-4),

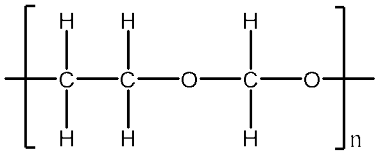 formula (DII-1), 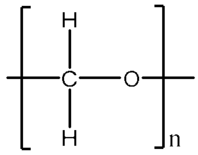 formula (DII-2),

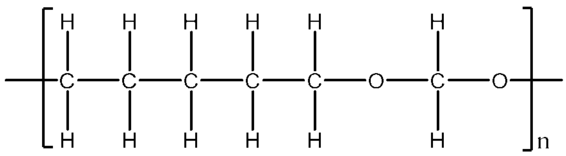 formula (DII-3), or

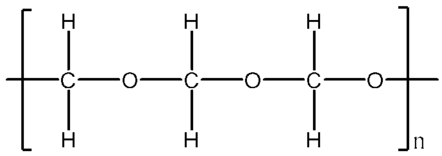 formula (DII-4).

Molecular chain of the above aldehyde-ketone polymer has a low degree of entanglement, which is conducive to improving the flexibility of the molecular chain. The molecular chain can fully stretch in the electrolyte solution, thereby facilitating forming a gelatinous substance with the electrolyte solution.

The above polymer is merely an example of a structural radical of the main molecular chain. In the embodiments of the present application, the polymer may also be obtained by copolymerizing the above structural radical with structural radicals of other types (for example, structural units such as an olefin structural unit, an ester monomer, a nitrile monomer, or an amide monomer).

When the above radical is substituted, the substituent may comprise one or more of a nitrile radical (-CN), a nitro, a sulfo, a sulfonyl, an amide, a carboxyl, an ester radical, or a halogen atom (for example, a chlorine atom, a fluorine atom,

or a bromine atom). The above substituent is a high-pressure resistant substituent, and is more conducive to stabilizing the polymer structure.

In some embodiments, polymerization degree n of the aldehyde-ketone polymer is selected from a positive integer of 500 to 15,000.

Optionally, the polymerization degree n of the aldehyde-ketone polymer is selected from a positive integer of 500 to 10,000.

In some embodiments, molecular weight of the aldehyde-ketone polymer is $1.2\times10^5$ g/mol to $1.0\times10^6$ g/mol.

As an example, the molecular weight of the aldehyde-ketone polymer may be $1.2\times10^5$ g/mol, $2\times10^5$ g/mol, $5\times10^5$ g/mol, $8\times10^5$ g/mol, $1\times10^6$ g/mol, $1.0\times10^6$ g/mol, or a range consisting of any two of the above values.

Relevant parameters of the polymers in the embodiments of the present application can be detected using the following methods:

The radicals of the polymers in the embodiments of the present application can be detected by infrared (IR) spectrophotometry. Specifically, the liquid-retaining polymer is tested using Thermo Nicolet Nexus 670 attenuated total reflection-Fourier transform infrared spectrometer (FTIR-ATR), and then tested with reference to standard GB/T6040-2002 in the test range of: 600-4,000 $cm^{-1}$ of the ATR method; with the repeatability: $\pm2$ $cm^{-1}$; the resolution: better than 4 $cm^{-1}$; and the transmission depth: 0.2-0.6 $\mu$m.

The structures of the polymers in the embodiments of the present application can be tested using nuclear magnetic resonance (NMR). Specifically, 1H NMR and 13C NMR are performed on a Varian Mercury Plus-400 nuclear magnetic resonance spectrometer at a test temperature of 20°C with TMS as the internal standard, with $CDCl_3$ as the solvent at a proton resonance frequency of 400 MHz.

The polymer monomer types of the polymers in the embodiments of the present application (particularly suitable for monomers accounting for small proportions of the polymers) can be tested by pyrolysis-gas chromatography-mass spectrometry. The specific test steps are as follows: 0.5 mg of sample is accurately weighed, transferred to a sample cup, immobilized to an injection rod, and transferred to a pyrolyzer installed near an injection port of the GC (gas chromatography). After the pyrolyzer temperature reaches the set temperature, the injection button is pressed, and the sample cup quickly falls into the furnace core of a pyrolyzing furnace by free fall. In an inert gas atmosphere of $N_2$, volatile components are instantly vaporized, carried into the gas chromatography column by a carrier gas for isolation, and finally detected by a flame ionization detector (FID) or a mass spectrometer (MS), thus obtaining a gas chromatogram or a total ion chromatogram.

The molecular weights of the polymers in the embodiments of the present application have well-known meanings in the art, may be measured using devices and methods commonly used in the art, and may be tested by gel permeation chromatography (GPC). The specific test steps are: an appropriate amount of a to-be-tested sample (the sample concentration is sufficient to ensure a shading degree of 8%-12%) is added to 20 ml of deionized water, simultaneously externally ultrasonicated for 5 min (53 KHz/120 W) to ensure that the sample is fully dispersed, and then measured in accordance with the standard GB/T19077-2016/ISO 13320:2009.

Or, the test is carried out using a multi-angle laser light scatterometer (MALLS), specifically using an instrument (Wyatt Technology Corporation, USA) that combines GPC with a Dawn Heleos II multi-angle laser light scattering device, an Optilab T-rEX refractive index (RI) detector, and a Visco Star II viscometer. The test is carried out at 30° with tetrahydrofuran as the mobile phase at a flow rate of 1.0 ml/min. Commercial software ASTRA6 is used to process the SEC-SAMLL data to obtain the molecular weight parameters.

In some embodiments, the liquid-retaining polymer is added to a first solvent at 70°C to form a polymer system; the polymer system is left to stand at 70°C for 8 h and at 25°C for 24 h or longer, and the polymer system is filtered through a 200-mesh filter mesh to leave a first substance, wherein mass (g) of the liquid-retaining polymer is q; mass (g) of the first substance is m; and the liquid-retaining polymer and the first substance satisfy: $5\leq m/q\leq1000$.

The liquid-retaining polymer has excellent liquid-absorbing performance and liquid-retaining performance, which is conductive to improving the liquid-absorbing capacity and the liquid-retaining capacity of the separator.

In some embodiments, $10\leq m/q\leq1000$; and further optionally, $10\leq m/q\leq50$. As an example, the m/q may be 5, 10, 20, 25, 28, 30, 32, 35, 40, 50, 80, 100, 200, 500, 1,000, or a range consisting of any two of the above values.

After the polymer system is left to stand at 70°C for 8 h and at 25°C for 24 h or longer, a part of the polymer system is transformed into a gelatinous substance through swelling and adsorption; the polymer system is in contact with the electrolyte solution, molecular chains of the polymer stretch and despiralize, the electrolyte solution can diffuse to among the molecular chains, and the molecular chains of the polymer swell and adsorb the electrolyte solution, which is conductive to improving the liquid-absorbing capacity and the liquid-retaining capacity of the separator, and can further improve the cycling performance of the battery cell.

As an example, based on mass of the polymer system, a ratio of the mass content of the liquid-retaining polymer to the mass content of the first solvent ranges from 1:100 to 1:10, and, for example, is 3:50.

As an example, the first solvent is same as or similar to the solvent of the electrolyte solution, and the first solvent may comprise at least one of a carbonate solvent and an ether solvent. For example, the carbonate solvent comprises a

cyclic carbonate solvent and/or a linear carbonate solvent.

As examples of the cyclic carbonate solvent, the cyclic carbonate solvent comprises one or more of ethylene carbonate (EC), vinylene carbonate (VC), fluoroethylene carbonate (FEC), difluoroethylene carbonate (DFEC), vinyl ethylene carbonate (VEC), and dicaprylyl carbonate (CC).

As examples of the linear carbonate solvent, the linear carbonate solvent comprises one or more of dimethyl carbonate (DMC), diethyl carbonate (DEC), ethyl methyl carbonate (EMC), diphenyl carbonate (DPC), methyl allyl carbonate (MAC), and polycarbonate (VA).

As examples of the ether solvent, the ether solvent comprises one or more of tetrahydrofuran (THF), 2-methyltetrahydrofuran (2me-thf), 1,3-dioxolane (DOL), dimethoxymethane (DMM), 1,2-dimethoxyethane (DME), and diglyme (DG).

Optionally, the first solvent may further contain both a lithium salt and an additive for the electrolyte solution, such as lithium hexafluorophosphate, vinylene carbonate (VC), or fluoroethylene carbonate (FEC).

In the present application, the m/q is also referred to as a precipitation number, which represents the ability of the liquid-retaining polymer and the solvent to transform into a gelatinous substance.

The first substance mainly comprises the gelatinous substance formed by the liquid-retaining polymer and the first solvent. In such a gelatinous substance, the molecular structure of the polymer will not change substantially.

In some embodiments, the first substance is dried at 80°C for 12 h to remove the first solvent in the first substance, and the main component of the first substance after drying is the liquid-retaining polymer described above, as detected by infrared (IR) spectrophotometry or tested by nuclear magnetic resonance (NMR).

In the embodiments of the present application, the temperature is increased to stretch the molecular chain of the liquid-retaining polymer within the safe operating temperature range of the battery cell, and promote the mutual attraction and physical combination of the molecular chain of the polymer and the electrolyte solution. At room temperature, the molecular chain segments of the liquid-retaining polymer have reduced activity, remain attached to the separator, and lock the electrolyte solution in the spatial environment of the liquid-retaining polymer, forming a gel or a gel-like state, which can increase the transport rate of active ions such as lithium ions, and improve the cycling performance.

In some embodiments, the separator comprises a porous substrate, and the liquid-retaining polymer is distributed in pores of the porous substrate. The porous substrate is mainly made of a polymer, which has a network structure. The liquid-retaining polymer can be dispersed in the network structure, that is, the liquid-retaining polymer is dispersed in the porous substrate.

In some other embodiments, the separator comprises the porous substrate and a polymer layer arranged on at least one surface of the porous substrate, the polymer layer comprising the liquid-retaining polymer. The polymer layer is arranged on at least one surface of the porous substrate, which means that the polymer layer may be arranged on one of the surfaces of the porous substrate, or may be arranged on both surfaces of the porous substrate. The liquid-retaining polymer can be dispersed in a solvent to form a mixed polymer system, which is coated on the porous substrate through coating processes such as atomization, spraying and gravure coating.

In the embodiments of the present application, the material of the porous substrate is not particularly limited, and any well-known porous substrate with good chemical stability and mechanical stability may be selected. For example, the porous substrate may comprise at least one of a porous polyolefin-based resin film (such as at least one of polyethylene, polypropylene, and polyvinylidene fluoride), a porous glass fiber, and a porous non-woven fabric. The porous substrate may be a single-layer film, or may be a multilayer composite film. When the porous substrate is a multilayer composite film, the materials in each layer may be identical, or may be different.

In some embodiments, the porosity of the porous substrate is greater than or equal to 25%; and is optionally 25% to 50%. When the porosity of the porous substrate is within the above range, the air permeability of the porous substrate can be improved, which is conductive to the migration of active ions. Moreover, due to the relatively small porosity, the mechanical performance of the porous substrate can be further improved, and the polymer layer can be well supported.

In some embodiments, thickness of the porous substrate may be smaller than or equal to 16 μm; and is optionally 5 μm to 12 μm. As an example, the thickness of the porous substrate may be 1 μm, 2 μm, 3 μm, 5 μm, 10 μm, 12 μm, 15 μm, 16 μm, or a range consisting of any two of the above values.

Optionally, the polymer layer comprises heat-resistant particles. Synergistic effects between the heat-resistant particles and the liquid-retaining polymer can further improve, e.g., the overall heat resistance and ion transport performance of the separator. The liquid-retaining polymer and the heat-resistant particles can be dispersed in a solvent to form a mixed polymer system, and the mixed polymer system is coated on the porous substrate through coating processes such as atomization, spraying, and gravure coating.

In some embodiments, based on total mass of the polymer layer, a ratio of percentage mass content of the liquid-retaining polymer to percentage mass content of the heat-resistant particles is (0.2 to 5.0):1; and is optionally (0.5 to 2.0):1. Contents of the heat-resistant particles and the liquid-retaining polymer within the above range can further improve, e.g., the overall heat resistance and ion transport performance of the separator. As an example, the ratio of the percentage mass content of the liquid-retaining polymer to the percentage mass content of the heat-resistant particles may be 0.2:1,

0.3:1, 0.4:1, 0.5:1, 0.6:1, 0.8:1, 1.0:1, 1.2:1, 1.5:1, 1.8:1, 2.0:1, 2.5:1, 2.8:1, 3.0:1, 3.2:1, 3.5:1, 3.8:1, 4.0:1, 4.2:1, 4.5:1, 4.8:1, 5.0:1, or a range consisting of any two of the above values.

In some embodiments, thickness of the polymer layer may be 0.5 μm to 3.0 μm, and is optionally 1.0 μm to 2.0 μm. The thickness of the polymer layer within the above range can further improve, e.g., the overall heat resistance and ion transport performance of the separator. As an example, the thickness of the polymer layer may be 0.5 μm, 0.8 μm, 1.0 μm, 1.2 μm, 1.5 μm, 1.8 μm, 2.0 μm, 2.3 μm, 2.5 μm, 2.8 μm, 3.0 μm, or a range consisting of any two of the above values.

Optionally, the separator may further comprise a heat-resistant coating located on at least one surface of the porous substrate, and the polymer layer is located on one side of the heat-resistant coating departing from the porous substrate.

The heat-resistant coating may comprise heat-resistant particles. In some embodiments, the heat-resistant particles comprise at least one of inorganic particles and organic particles. The heat-resistant particles are added to improve the heat resistance of the separator.

In some embodiments, percentage mass content of the inorganic particles in the heat-resistant coating is smaller than or equal to 30. As an example, the percentage mass content of the inorganic particles in the heat-resistant coating is 1%, 2%, 3%, 4%, 5%, 6%, 7%, 8%, 9%, 10%, 15%, 20%, 25%, 30%, or a range consisting of any two of the above values.

The inorganic particles may comprise at least one of inorganic particles having a dielectric constant of 5 or more, inorganic particles capable of transporting active ions, and inorganic particles capable of undergoing electrochemical oxidation and reduction.

In some embodiments, the inorganic particles having a dielectric constant of 5 or more may comprise at least one of boehmite (γ-AlOOH), aluminum oxide ($Al_2O_3$), barium sulfate ($BaSO_4$), magnesium oxide (MgO), magnesium hydroxide ($Mg(OH)_2$), silicon oxide ($SiO_x$, $0<x\leq2$), tin dioxide ($SnO_2$), titanium oxide ($TiO_2$), calcium oxide (CaO), zinc oxide (ZnO), zirconium oxide ($ZrO_2$), yttrium oxide ($Y_2O_3$), nickel oxide (NiO), hafnium dioxide ($HfO_2$), cerium oxide ($CeO_2$), zirconium titanate ($ZrTiO_3$), barium titanate ($BaTiO_3$), magnesium fluoride ($MgF_2$), $Pb(Zr,Ti)O_3$ (abbreviated as PZT), $Pb_{1-m}La_mZr_{1-n}Ti_nO_3$ (abbreviated as PLZT, $0<m<1$, $0<n<1$), and $Pb(Mg_3Nb_{2/3})O_3$-$PbTiO_3$ (abbreviated as PMN-PT).

In some embodiments, the inorganic particles capable of transporting active ions may comprise at least one of lithium phosphate ($Li_3PO_4$), lithium titanium phosphate ($Li_xTi_y(PO_4)_3$, $0<x<2$, $0<y<3$), lithium aluminum titanium phosphate ($Li_xAl_yTi_z(PO_4)_3$, $0<x<2$, $0<y<1$, $0<z<3$), $(LiAlTiP)_xO_y$ glass ($0<x<4$, $0<y<13$), lithium lanthanum titanate ($Li_xLa_yTiO_3$, $0<x<2$, $0<y<3$), lithium germanium thiophosphate ($Li_xGe_yP_zS_w$, $0<x<4$, $0<y<1$, $0<z<1$, $0<w<5$), lithium nitride ($Li_xN_y$, $0<x<4$, $0<y<2$), $SiS_2$ glass ($Li_xSi_yS_z$, $0<x<3$, $0<y<2$, $0<z<4$), and $P_2S_5$ glass ($Li_xP_yS_z$, $0<x<3$, $0<y<3$, $0<z<7$).

In some embodiments, the inorganic particles capable of undergoing electrochemical oxidation and reduction may comprise at least one of a lithium-containing transition metal oxide, a lithium-containing phosphate of olivine structure, a carbon-based material, a silicon-based material, a tin-based material, and a lithium-titanium compound.

In some embodiments, the heat-resistant coating may further comprise other organic particles, for example, the organic particles may comprise at least one of polystyrene, polyethylene, polyimide, melamine resin, phenolic resin, polypropylene, polyester (e.g., polyethylene terephthalate, polyethylene naphthalate, polybutylene terephthalate), polyphenylene sulfide, polyaramide, polyamideimide, polyimide, a butyl acrylate-ethyl methacrylate copolymer, and a mixture thereof.

In some embodiments, the heat-resistant coating may further comprise a binder. As an example, the binder may comprise at least one of an acrylic resin of an aqueous solution type (e.g., a homopolymer of acrylic acid, methacrylic acid, and sodium acrylate monomers, or a copolymer thereof with other comonomers), polyvinyl alcohol (PVA), an isobutylene-maleic anhydride copolymer, and polyacrylamide.

In some embodiments, thickness of the heat-resistant coating is 4 μm or smaller, thereby contributing to improving the energy density of the battery cell. In an embodiment of the present application, the thickness of the heat-resistant coating refers to thickness of the heat-resistant coating located on one side of the substrate. As an example, the thickness of the heat-resistant coating may be 0.1 μm, 0.5 μm, 1 μm, 1.5 μm, 2μm, 2.5 μm, 3 μm, 3.5 μm, 4 μm, or a range consisting of any two of the above values.

In some embodiments, coating weight of the liquid-retaining polymer is 0.5 mg/1540.25 $mm^2$ to 5 mg/1540.25 $mm^2$.

The coating weight within the above range can further improve the liquid-retaining capacity of the separator.

Optionally, coating weight of the polymer layer may be 0.5 mg/1540.25 $mm^2$ to 3.5 mg/1540.25 $mm^2$.

As an example, the coating weight of the polymer layer may be 0.5 mg/1540.25 $mm^2$, 0.6 mg/1540.25 $mm^2$, 0.8 mg/1540.25 $mm^2$, 1.0 mg/1540.25 $mm^2$, 1.2 mg/1540.25 $mm^2$, 1.5 mg/1540.25 $mm^2$, 1.8 mg/1540.25 $mm^2$, 2.0 mg/1540.25 $mm^2$, 2.5 mg/1540.25 $mm^2$, 3 mg/1540.25 $mm^2$, 3.5 mg/1540.25 $mm^2$, 4 mg/1540.25 $mm^2$, 4.5 mg/1540.25 $mm^2$, 5mg/1540.25$mm^2$, or a range consisting of any two of the above values.

In an embodiment of the present application, the coating weight refers to coating weight of the liquid-retaining polymer on one surface of the separator, and may be detected by well-known devices and methods in the art. For example, a substrate of a given parent roll and the separator are cut into small wafers of 1540.25 $mm^2$, 10 small wafers of the separator are weighed respectively, and the coating weight of the highly liquid-absorbing polymer in the separator can be

calculated.

**Battery cell**

In a second aspect, an embodiment of the present application presents a battery cell, comprising an electrode assembly and an electrolyte, wherein the electrode assembly comprises a positive electrode plate, a negative electrode plate, and a separator, the separator is arranged between the positive electrode plate and the negative electrode plate, and the separator comprises the separator according to any one embodiment in the first aspect of the present application.

[Positive electrode plate]

The positive electrode plate comprises a positive electrode current collector and a positive electrode active material layer arranged on at least one surface of the positive electrode current collector.

As an example, the positive electrode current collector has two surfaces opposite in its own thickness direction, and the positive electrode active material layer is arranged on either one or both of the two opposite surfaces of the positive electrode current collector.

The positive electrode active material layer comprises a positive electrode active material, and a positive electrode active material for a battery cell well-known in the art may be used as the positive electrode active material. As an example, the positive electrode active material may comprise at least one of the following materials: a lithium-containing phosphate compound, a lithium-containing transition metal oxide, a sodium-containing phosphate compound, and a sodium-containing transition metal oxide.

As an example, general formula of an olivine-type phosphate active material (lithium-containing phosphate compound) is: $Li_xA_yMe_aM_bP_{1-c}X_cY_z$, wherein $0 \le x \le 1.3$, $0 \le y \le 1.3$, and $0.9 \le x+y \le 1.3$; $0.9 \le a \le 1.5$, $0 \le b \le 0.5$, and $0.9 \le a+b \le 1.5$; $0 \le c \le 0.5$; $3 \le z \le 5$; A comprises one or more of Na, K, or Mg; Me comprises one or more of Mn, Fe, Co, or Ni; M comprises one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, or Ce; X comprises one or more of S, Si, Cl, B, C, or N; and Y comprises one or more of O or F. Specifically, the olivine-type phosphate active material comprises one or more of $LiFePO_4$, $LiMnPO_4$, $LiNiPO_4$, and $LiCoPO_4$.

As an example, a lithium-transition metal oxide (a layered material such as ternary, lithium/sodium nickelate, lithium/sodium cobaltate, lithium/sodium manganate, and lithium-rich layered and rocksalt phase-layered materials). General formula of a positive electrode active material of layered structure is: $Li_xA_yNi_aCo_bMn_cM_{(1-a-b-c)}Y_z$, wherein $0 \le x \le 2.1$, $0 \le y \le 2.1$, and $0.9 \le x+y \le 2.1$; $0 \le a \le 1$, $0 \le b \le 1$, $0 \le c \le 1$, and $0.1 \le a+b+c \le 1$; $1.8 \le z \le 3.5$; A comprises one or more of Na, K, or Mg; M comprises one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, or Ce; and Y comprises one or more of O or F. Optionally, y=0. Specifically, the positive electrode active material of layered structure may comprise one or more of lithium cobaltate (LCO), lithium nickelate (LNO), lithium manganate (LMO), $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811), and NCA.

In some embodiments, the positive electrode current collector can be a metal foil or a composite current collector. As an example of the metal foil, an aluminum foil or an aluminum alloy foil may be used. The composite current collector may comprise a polymer material substrate layer and a metal material layer formed on at least one surface of the polymer material substrate layer. As an example, the metal material may comprise a combination of one or more selected from aluminum, aluminum alloy, nickel, nickel alloy, titanium, titanium alloy, silver, and silver alloy, and the polymer material substrate layer may comprise a combination of one or more selected from polypropylene (PP), polyethylene terephthalate (PET), polybutylene terephthalate (PBT), polystyrene (PS), and polyethylene (PE).

In some embodiments, the positive electrode active material layer further optionally comprises a positive electrode conductive agent. In an embodiment of the present application, types of the positive electrode conductive agent are not particularly limited. As an example, the positive electrode conductive agent comprises a combination of one or more selected from superconducting carbon, conductive black, conductive graphite, acetylene black, carbon black, Ketjen black, carbon dot, carbon nanotube, graphene, and carbon nanofiber. In some embodiments, based on total mass of the positive electrode active material layer, percentage mass content of the positive electrode conductive agent is less than or equal to 5%.

In some embodiments, the positive electrode active material layer further optionally comprises a positive electrode binder. In an embodiment of the present application, types of the positive electrode binder are not particularly limited. As an example, the positive electrode binder may comprise a combination of one or more selected from polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin. In some embodiments, based on the total mass of the positive electrode active material layer, percentage mass content of the positive electrode binder is less than or equal to 5%. The positive electrode binder has a higher crystallinity than the fluorinated polymer in the embodiments of the present

application. The positive electrode binder has a higher melting temperature than the fluorinated polymer in the embodiments of the present application.

The positive electrode active material layer is generally formed by coating a positive electrode slurry on the positive electrode current collector, followed by drying and cold pressing. The positive electrode slurry is generally formed by dispersing the positive electrode active material, an optional conductive agent, an optional binder, and any other components in a solvent and sufficiently stirring the mixture. The solvent may be, but is not limited to, N-methylpyrrolidone (NMP). Of course, the preparation of the positive electrode plate is not limited to the above method, and the preparation method described above may also be used.

[Negative electrode plate]

In some embodiments, the negative electrode plate comprises a negative electrode current collector and a negative electrode active material layer arranged on at least one surface of the negative electrode current collector and comprising a negative electrode active material.

As an example, the negative electrode current collector has two surfaces opposite in its own thickness direction, and the negative electrode active material layer is arranged on either one or both of the two opposite surfaces of the negative electrode current collector.

A negative electrode active material for a battery cell well-known in the art may be used as the negative electrode active material. As an example, the negative electrode active material may include, but is not limited to, at least one of natural graphite, artificial graphite, soft carbon, hard carbon, a silicon-based material, a tin-based material, and lithium titanate. The silicon-based material may comprise at least one of elemental silicon, a silicon oxide, a silicon-carbon composite, a silicon-nitrogen composite, and a silicon alloy material. The tin-based material may comprise at least one of elemental tin, a tin oxide, and a tin alloy material.

In some embodiments, the negative electrode active material layer further optionally comprises a negative electrode conductive agent. In an embodiment of the present application, types of the negative electrode conductive agent are not particularly limited. As an example, the negative electrode conductive agent may comprise at least one of superconducting carbon, conductive graphite, acetylene black, carbon black, Ketjen black, carbon dot, carbon nanotube, graphene, and carbon nanofiber. In some embodiments, based on total mass of the negative electrode active material layer, percentage mass content of the negative electrode conductive agent is less than or equal to 5%.

In some embodiments, the negative electrode active material layer further optionally comprises a negative electrode binder. In an embodiment of the present application, types of the negative electrode binder are not particularly limited. As an example, the negative electrode binder may comprise at least one of styrene butadiene rubber (SBR), water soluble unsaturated resin SR-1B, or water-based acrylic acid resin (e.g., polyacrylic acid (PAA), polymethacrylic acid (PMAA), or sodium polyacrylate (PAAS)), polyacrylamide (PAM), polyvinyl alcohol (PVA), sodium alginate (SA), and carboxymethyl chitosan (CMCS). In some embodiments, based on the total mass of the negative electrode active material layer, percentage mass content of the negative electrode binder is less than or equal to 5%.

In some embodiments, the negative electrode active material layer further optionally comprises other adjuvants. As an example, the other adjuvants may comprise a thickener, e.g., sodium carboxymethyl cellulose (CMC) or a PTC thermistor material. In some embodiments, based on the total mass of the negative electrode active material layer, percentage mass content of the other adjuvants is less than or equal to 2%.

In some embodiments, the negative electrode current collector may be a metal foil or a composite current collector. As an example of the metal foil, a copper foil may be used. The composite current collector may comprise a polymer material substrate layer and a metal material layer formed on at least one surface of the polymer material substrate layer. As an example, the metal material may comprise at least one of copper, copper alloy, nickel, nickel alloy, titanium, titanium alloy, silver, and silver alloy. As an example, the polymer material substrate layer may comprise at least one of polypropylene (PP), polyethylene terephthalate (PET), polybutylene terephthalate (PBT), polystyrene (PS), and polyethylene (PE).

The negative electrode active material layer is generally formed by coating a negative electrode slurry on the negative electrode current collector, followed by drying and cold pressing. The negative electrode slurry is generally formed by dispersing the negative electrode active material, an optional conductive agent, an optional binder, and other optional adjuvants in a solvent, and sufficiently stirring the mixture. The solvent may be, but is not limited to, N-methylpyrrolidone (NMP) or deionized water. Of course, the preparation of the negative electrode plate is not limited to the above method, and the preparation method described above may also be used.

The negative electrode plate does not exclude other additional functional layers except for the negative electrode active material layer. For example, in some embodiments, the negative electrode plate in the present application further comprises a conductive priming coat (e.g., composed of a conductive agent and a binder) sandwiched between the negative electrode current collector and the negative electrode active material layer and arranged on a surface of the negative electrode current collector. In some other embodiments, the negative electrode plate according to the present

application further comprises a protective layer covering on a surface of the negative electrode active material layer.

[Electrolyte]

During charge-discharge of the battery cell, active ions are intercalated and deintercalated back and forth between the positive electrode plate and the negative electrode plate, and the electrolyte solution serves for conducting the active ions between the positive electrode plate and the negative electrode plate. Types of the electrolyte solution are not particularly limited in the present application, and may be selected as required.

The electrolyte solution comprises an electrolyte salt and a solvent. Types of the electrolyte salt and the solvent are not specifically limited, and may be selected based on actual requirements.

When the battery cell in the present application is a lithium-ion secondary, as an example, the electrolyte salt may include, but is not limited to, at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate ($LiPO_2F_2$), lithium difluorobis(oxalato)phosphate (LiDFOP), and lithium tetrafluoro(oxalato)phosphate (LiTFOP).

When the battery cell in the present application is a sodium-ion battery, as an example, the electrolyte salt may include, but is not limited to, at least one of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalate)borate (NaBOB), sodium difluorophosphate ($NaPO_2F_2$), sodium difluorobis(oxalato) phosphate (NaDFOP), and sodium tetrafluoro(oxalato)phosphate (NaTFOP).

As an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), diethyl sulfone (ESE), tetrahydrofuran (THF), 2-methyltetrahydrofuran (2me-THF), 1,3-dioxolane (DOL), dimethoxymethane (DMM), 1,2-dimethoxyethane (DME), and diglyme (DG).

In some embodiments, the electrolyte solution further optionally comprises an additive. For example, the additive may include a negative electrode film-forming additive, or may include a positive electrode film-forming additive, or may further include an additive that can improve some performance of the battery, such as an additive that improves overcharge performance of the battery, an additive that improves high temperature performance of the battery, or an additive that improves low temperature power performance of the battery.

In some embodiments, the positive electrode plate, the separator, and the negative electrode plate may be made into an electrode assembly by a winding process and/or a stacking process.

In some embodiments, the battery cell may comprise an outer package. The outer package may be used to encapsulate the electrode assembly and the electrolyte solution described above.

In some embodiments, the outer package of the battery cell may be a hard shell, such as a hard plastic shell, an aluminum shell, or a steel shell. The outer package of the battery cell may also be a pouch, such as a bag-type pouch. The material of the pouch may be plastic, such as at least one of polypropylene (PP), polybutylene terephthalate (PBT), and polybutylene succinate (PBS).

In some embodiments, the positive electrode plate, the separator, and the negative electrode plate may be made into an electrode assembly by a winding process or a stacking process.

The shape of the battery cell is not particularly limited in the present application, and may be a cylinder shape, a square shape, or any other shape. FIG. 1 is a battery cell 5 with a square structure as an example.

In some embodiments, as shown in FIGS. 1 and 2, the outer package may comprise a case 51 and a cover plate 53. The case 51 may comprise a bottom plate and a side plate connected to the bottom plate, wherein the bottom plate and the side plate enclose to form an accommodating cavity. The case 51 has an opening that communicates with the accommodating cavity, and the cover plate 53 is used to cover the opening to close the accommodating cavity. The positive electrode plate, the negative electrode plate, and the separator may form an electrode assembly 52 by a winding process or a stacking process. The electrode assembly 52 is encapsulated within the accommodating cavity. The electrode assembly 52 is impregnated with the electrolyte solution. A number of the electrode assembly 52 included in the battery cell 5 can be one or more, and can be adjusted according to requirements.

The method for preparing a battery cell in the present application is well known. In some embodiments, the positive electrode plate, the separator, the negative electrode plate, and the electrolyte solution may be assembled to form the battery cell. As an example, the positive electrode plate, the separator, and the negative electrode plate may be made

into an electrode assembly by a winding process or a stacking process. The electrode assembly is placed in an outer package, and dried, then the electrolyte solution is injected therein, and the battery cell is obtained through the processes, such as vacuum encapsulation, standing, formation, and shaping.

In some embodiments of the present application, the battery cells according to the present application may be assembled into a battery module, the number of battery cells comprised in the battery module may be a plural number, and the specific number may be regulated based on the application and capacity of the battery module.

FIG. 3 is a schematic view of a battery module 4 as an example. As shown in FIG. 3, in the battery module 4, a plurality of battery cells 5 can be sequentially arranged in a length direction of the battery module 4. Of course, any other arrangements are also possible. The plurality of battery cells 5 may further be fixed by fasteners.

Optionally, the battery module 4 may further comprise a shell having an accommodating space, in which the plurality of battery cells 5 are accommodated.

In some embodiments, the above battery modules may be further assembled into a battery pack, and the number of battery modules comprised in the battery pack may be regulated based on the application and capacity of the battery pack.

Both the battery module 4 and the battery pack can be used as specific examples of batteries in the embodiments of the present application.

FIGS. 4 and 5 are schematic diagrams of a battery pack 1 as an example. As shown in FIG. 4 and FIG. 5, the battery pack 1 may include a battery box and a plurality of battery modules 4 arranged in the battery box. The battery box includes an upper box 2 and a lower box 3, where the upper box 2 is configured to cover the lower box 3 to form an enclosed space for accommodating the battery modules 4. The plurality of battery modules 4 may be arranged in the battery box in any manner.

## Electrical apparatus

In a third aspect, the present application provides an electrical apparatus, comprising at least one of the battery cell, the battery module, and the battery pack of the present application. The battery cell, the battery module, and the battery pack may be used as a power source of the electrical apparatus, or may be used as an energy storage unit of the electrical apparatus. The electrical apparatus may be, but is not limited to, a mobile device (such as a mobile phone or a laptop), an electric vehicle (such as an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

The battery cell, the battery module, or the battery pack may be selected for the electrical apparatus based on use requirements thereof. FIG. 6 is a schematic diagram of an electrical apparatus as an example. The electrical apparatus 6 is, e.g., an all-electric vehicle, a hybrid electric vehicle, or a plug-in hybrid electric vehicle. In order to meet the requirements of the electrical apparatus for high power and high energy density, a battery pack 1 or a battery module may be used. As another example, the electrical apparatus may be a mobile phone, a tablet, a laptop, etc. The electrical apparatus is generally required to be thin and light, and may use a battery cell as a power source.

Examples

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. Where no manufacturers are specified, the employed reagents or instruments are all commercially available conventional products.

Example 1 **Preparation of a lithium-ion battery**

(1) Preparation of a positive electrode plate:

An aluminum foil with a thickness of 12 μm was used as a positive electrode current collector.

A positive electrode active material $LiNi_{0.6}Co_{0.2}Mn_{0.2}O_2$ (NCM622), a conductive agent carbon black, and a binder polyvinylidene fluoride (PVDF) were dissolved in an appropriate amount of N-methylpyrrolidone (NMP). The mixture was sufficiently stirred and mixed to make into a positive electrode slurry. Mass ratio of the NCM622, the conductive carbon black, and the PVDF in the positive electrode slurry was 97.5:1.4:1.1. The positive electrode slurry was coated on a current collector aluminum foil, vacuum dried at 100°C, then cold pressed, then subjected to edge cutting, slicing, and striping, and then dried under vacuum at 85°C for 4 h, to make into the positive electrode plate.

(2) Preparation of a negative electrode plate:

A copper foil with a thickness of 8 μm was used as a negative electrode current collector.

A negative electrode active material artificial graphite, a conductive agent carbon black, a binder styrene butadiene rubber (SBR), and a thickening agent sodium carboxymethyl cellulose (CMC) at a weight ratio of 97.4:2:0.5:0.1 were fully mixed, and then the mixture was added to deionized water to make into a negative electrode slurry. The negative electrode slurry was coated on a current collector copper foil, dried at 85°C, then subjected to cold pressing, edge cutting, slicing, and striping, and then dried under vacuum at 120°C for 12 h, to make into the negative electrode plate.

(3) Preparation of an electrolyte solution:

A non-aqueous organic solvent ethylene carbonate, ethyl methyl carbonate, and dimethyl carbonate were mixed at a volume ratio of 1:1:1 in an environment with a water content of less than 10 ppm, to obtain a solvent of the electrolyte solution, and then a lithium salt $LiPF_6$ and the mixed solvent was mixed to prepare the electrolyte solution with a lithium salt concentration of 1 mol/L.

(4) Preparation of a separator

A polyethylene film (PE) of 7 μm was used as a substrate.

A liquid-retaining polymer was dispersed in a solvent dimethyl carbonate (DMC) to form a mixed system, which was atomized and sprayed on two surfaces of the polyethylene film to form polymer layers, respectively. Water was used as the atomization solvent, and its mass content in the mixed system was 1%.

(5) Preparation of a lithium-ion battery:

The positive electrode plate, the separator, and the negative electrode plate were sequentially stacked, such that the separator was located between the positive electrode plate and the negative electrode plate to function for separation, and then winded to obtain an electrode assembly. The electrode assembly was placed in an outer package shell, and dried. Then, the electrolyte solution was injected therein, and the lithium-ion battery was obtained through processes, e.g., vacuum encapsulation, standing, formation, and shaping.

Comparative Example 1

A lithium-ion battery was prepared using a method similar to that in Example 1. The difference from Example 1 was that the separator in Comparative Example 1 was a polyethylene film (PE) of 7 μm.

Comparative Example 2

A lithium-ion battery was prepared using a method similar to that in Example 1. The difference from Example 1 was that the material of the liquid-retaining polymer of the separator in Comparative Example 2 was changed.

Examples 1-2 to 1-6

A lithium-ion battery was prepared using a method similar to that in Example 1. The difference from Example 1 was that the coating weight of the liquid-retaining polymer in the polymer layer of the separator in Examples 1-2 to 1-6 was adjusted.

Examples 2-1 to 2-3

A lithium-ion battery was prepared using a method similar to that in Example 1. The difference from Example 1 was that the type of the liquid-retaining polymer in the polymer layer of the separator in Examples 2-1 to 2-3 was adjusted.

Example 3-1

A lithium-ion battery was prepared using a method similar to that in Example 1. The difference from Example 1 was that the setting position of the polymer layer of the separator in Example 3-1 was adjusted. Specifically, the preparation steps of the separator comprise:

a polyethylene film (PE) of 7 μm was used as a substrate of the separator; and
silicon oxide particles and the binder aqueous solution type polyacrylic acid at a mass ratio of 20:80 were fully mixed in an appropriate amount of solvent deionized water to obtain a coating slurry.

The resulting coating slurry was coated on 2 surfaces of the PE substrate using a coating machine to form a heat-resistant coating.

The liquid-retaining polymer and the binder were dispersed in a solvent dimethyl carbonate (DMC) to form a mixed system, which was atomized and sprayed on a surface of the heat-resistant coating to form a polymer layer, thus obtaining the separator.

Examples 3-2 to 3-5

A lithium-ion battery was prepared using a method similar to that in Example 1. The difference from Example 1 was that the preparation method of the separator was adjusted in Examples 3-3-2 to 3-5. Specifically, the preparation steps of the separator comprise:

a polyethylene film (PE) of 7 μm was used as a substrate of the separator; and
the liquid-retaining polymer, the silicon oxide particles, and the binder aqueous solution type polyacrylic acid at a mass ratio of 80:20 were fully mixed in an appropriate amount of solvent deionized water to obtain a coating slurry.

The resulting coating slurry was coated on 2 surfaces of the PE substrate using a coating machine to form a heat-resistant coating.

.The liquid-retaining polymer and the binder were dispersed in a solvent dimethyl carbonate (DMC) to form a mixed system, which was atomized and sprayed on a surface of the heat-resistant coating to form a polymer layer, thus obtaining the separator.

In Example 3-2, the mass ratio of the liquid-retaining polymer to the silicon oxide particles was 1.5:1.

In Example 3-3, the mass ratio of the liquid-retaining polymer to the silicon oxide particles was 0.5:1.

In Example 3-4, the mass ratio of the liquid-retaining polymer to the silicon oxide particles was 2:1.

In Example 3-5, the mass ratio of the liquid-retaining polymer to the silicon oxide particles was 0.2:1.

Data in the examples and the comparative examples is as shown in Table 1.

## Testing

1. Cycling performance of the lithium-ion battery at a large rate

At 25 °C, the lithium-ion battery was charged to 4.25 V at a constant current of 4C, then charged at a constant voltage of 4.25 V until the current was 0.05C, and then discharged to 2.8 V at a constant current of 1C, which was a charge-discharge cycle. The number of battery cycles was calculated when the battery capacity decayed to 80% with the initial discharge capacity as 100%.

2. Test of separator parameters

Test of the mass M of the separator: 10 pieces of separator with an area of 1540.25 $mm^2$ were cut using a slicing machine, and weighed in an electronic balance. The weight of the separator in this case was denoted as M.

Test of $m_1$: 10 pieces of the sliced separator with the area of 1540.25 $mm^2$ were placed in 10 mL of 1M $LiPF_6$ and an electrolyte solution of EC, EMC and DMC at a volume ratio of 1:1:1 for 2 h, taken out, suspended for 2 min, and weighed with an electronic balance, to obtain the weight denoted as $m_1$; and
the liquid retention rate was calculated as per $(m_1\text{-}M)/M\times 100\%$.

Test of $m_2$: The separator impregnated with the electrolyte solution was placed in a pressure apparatus, pressurized to 10,000 N, kept under the pressure for 5 min, taken out, and weighed with an electronic balance, to obtain the weight denoted as $m_2$; and
the liquid retention rate after pressurization was calculated as per $(m_2\text{-}M)/M\times 100\%$.

The liquid-retaining capacity was: $\Lambda=\times 100\% . \frac{m_2-M}{m_1-M}$

## Test results

The test results are as shown in Tables 1 and 2.

Table 1

| Item | Separator | | | | | | | | | |
|---|---|---|---|---|---|---|---|---|---|---|
| | Polymer | | | | | | | | | |
| | Monomer 1 | Monome r 2 | Monomer 3 | Crystallini ty Xc% | Melting temperatur e Tm (°C) | Glass transition temperatur e Tg (°C) | Molecul ar weight (g/mol) | K | Precipitati on number m/q | Coating weight of liquid-retaining polymer (mg/1540.25 $mm^2$) |
| Comparati ve Exam-ple 1 | None | None | None | None | None | None | None | Non e | None | None |
| Comparati ve Example 2 | 95% VDF | 5% TFE | / | 48 | 167 | 56 | 1,300,00 0 | / | 1.2 | 1.5 |
| Example 1 | 80% VDF | 15% HFP | 5% TFE | 25 | 135 | 35 | 600,000 | / | 25 | 1.5 |
| Example 1-2 | 80% VDF | 15% HFP | 5% TFE | 25 | 135 | 35 | 600,000 | / | 25 | 0.5 |
| Example 1-3 | 80% VDF | 15% HFP | 5% TFE | 25 | 135 | 35 | 600,000 | / | 25 | 1 |
| Example 1-4 | 80% VDF | 15% HFP | 5% TFE | 25 | 135 | 35 | 600,000 | / | 25 | 2 |
| Example 1-5 | 80% VDF | 15% HFP | 5% TFE | 25 | 135 | 35 | 600,000 | / | 25 | 2.5 |
| Example 1-6 | 80% VDF | 15% HFP | 5% TFE | 25 | 135 | 35 | 600,000 | / | 25 | 3 |
| Example 2-1 | 60% methyl methacrylate | 35% butyl acrylate | 5% acrylonitri le | / | / | -10 | 350,000 | 1.1 | 18 | 1.5 |
| Example 2-2 | 90% Oxirane | 10% Oxi-rane-2-car-boxyl ic acid | / | / | / | -12 | 250,000 | 1.1 | 7 | 1.5 |
| Example 2-3 | 80% butyral-dehy de | 20% poly-viny l alco-hol | / | / | / | 55 | 180,000 | 0.9 | 7 | 1.5 |

(continued)

| Item | Separator | | | | | | | | | |
|---|---|---|---|---|---|---|---|---|---|---|
| | Polymer | | | | | | | | | |
| | Monomer 1 | Monome r 2 | Monomer 3 | Crystallini ty Xc% | Melting temperatur e Tm (°C) | Glass transition temperatur e Tg (°C) | Molecul ar weight (g/mol) | K | Precipitati on number m/q | Coating weight of liquid-retaining polymer (mg/1540.25 $mm^2$) |
| Example 3-1 | 80% VDF | 15% HFP | 5% TFE | 25 | 135 | 35 | 600,000 | / | 25 | 1.5 |
| Example 3-2 | 80% VDF | 15% HFP | 5% TFE | 25 | 135 | 35 | 600,000 | / | 25 | 1.5 |
| Example 3-3 | 80% VDF | 15% HFP | 5% TFE | 25 | 135 | 35 | 600,000 | / | 25 | 1.5 |
| Example 3-4 | 80% VDF | 15% HFP | 5% TFE | 25 | 135 | 35 | 600,000 | / | 25 | 1.5 |
| Example 3-5 | 80% VDF | 15% HFP | 5% TFE | 25 | 135 | 35 | 600,000 | / | 25 | 1.5 |

In Table 1, 80% VDF means that the molar percentage of vinylidene fluoride (VDF) is 80% based on the total mole number of vinylidene fluoride (VDF), hexafluoropropylene (HFP), and tetrafluoroethylene (TFE).

Table 2

| Item | Separator | | | Lithium-ion battery |
|---|---|---|---|---|
| | Liquid-retaining capacity A | Liquid retention rate (before pressurization) | Liquid retention rate (after pressurization) | Number of cycles required to reduce charge-discharge at 4C rate to 80% SOC |
| Comparative Example 1 | 5% | 65% | 3.25% | 150 |
| Comparative Example 2 | 11% | 85% | 9.35% | 170 |
| Example 1 | 55% | 150% | 82.50% | 400 |
| Example 1-2 | 30% | 95% | 28.5% | 280 |
| Example 1-3 | 36% | 124% | 44.64% | 340 |
| Example 1-4 | 60% | 163% | 97.80% | 428 |
| Example 1-5 | 64% | 172% | 110.08% | 446 |
| Example 1-6 | 70% | 181% | 126.70% | 476 |
| Example 2-1 | 61% | 178% | 108.58% | 430 |
| Example 2-2 | 50% | 143% | 71.50% | 385 |
| Example 2-3 | 42% | 135% | 56.70% | 380 |
| Example 3-1 | 63% | 165% | 103.95% | 450 |
| Example 3-2 | 48% | 138% | 66.24% | 386 |
| Example 3-3 | 32% | 125% | 40.00% | 343 |
| Example 3-4 | 50% | 141% | 70.50% | 365 |
| Example 3-5 | 25% | 90% | 22.50% | 325 |

In Table 2, the liquid-retaining capacity $\Lambda=\left[\frac{m_2-M}{m_1-M}\right]\times\frac{v}{\lambda}$.

The liquid retention rate (before pressurization) is $(m_1-M)/M\times100\%$.

The liquid retention rate (after pressurization) is $(m_2-M)/M\times100\%$.

Compared with Comparative Example 1, the cycling performance of the lithium-ion battery is improved by adding the polymer of the present application to the separator in the embodiments of the present application.

Although a polymer was added to the separator in Comparative Example 2, the polymer has a poor liquid-retaining capacity and a poor liquid-absorbing capacity, and fails to effectively improve the cycling performance of the lithium-ion battery.

Compared with Comparative Example 1, a polymer layer is provided on the surface of the separator in the embodiments of the present application. The introduction of the polymer can improve the liquid absorption rate and the liquid-retaining capacity of the separator, and can further improve the cycling performance of the battery cell.

While the present application has been described with reference to the preferred embodiments, various modifications may be made and components thereof may be replaced with equivalents without departing from the scope of the present application. In particular, the technical features mentioned in the various embodiments can be combined in any manner as long as there is no structural conflict. The present application is not limited to the particular embodiments disclosed herein, but rather includes all technical solutions falling within the scope of the claims.

**Claims**

**1.** A separator comprising a liquid-retaining polymer, the separator satisfying:

$$\frac{m_2-M}{m_1-M}\geq 25\%;$$

wherein M represents mass (g) of the separator without absorbing an electrolyte solution;
$m_1$ represents mass (g) of the separator weighed under an ambient pressure after being impregnated with the electrolyte solution for 2 h; and
$m_2$ represents mass (g) of the separator weighed under a pressure of 10,000 N in the ambient pressure after being impregnated with the electrolyte solution for 2 h.

**2.** The method according to claim 1, wherein the separator satisfies:

$$\frac{m_2 - M}{m_1 - M} \geq 30\%.$$

**3.** The separator according to claim 1 or 2, wherein the separator satisfies:

$$88\% \leq \frac{m_1 - M}{\mathrm{M}} \times 100\% \leq 300\%.$$

**4.** The separator according to any one of claims 1 to 3, wherein the separator satisfies:

$$22.5\% \leq \frac{m_2 - M}{\mathrm{M}} \times 100\% \leq 300\%.$$

**5.** The separator according to any one of claims 1 to 4, wherein the liquid-retaining polymer comprises a fluorinated polymer;

optionally, crystallinity of the fluorinated polymer measured by differential scanning calorimetry is $Xc_1$, $0<Xc_1\leq30\%$;
melting temperature (°C) of the fluorinated polymer is $T_{m1}$, $0<T_{m1}\leq140$;
further optionally, glass transition temperature (°C) of the fluorinated polymer is $T_{g1}$, $-150\leq T_{g1}\leq60$;
still further optionally, the fluorinated polymer comprises at least one of a structural unit represented by formula (AI) to a structural unit represented by formula (AIII),

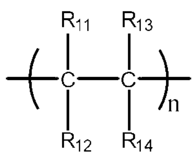 formula (AI), 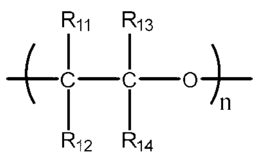 formula (AII),

in the formulas (AI) and (AII), $R_{11}$, $R_{12}$, $R_{13}$, and $R_{14}$ each independently comprise a hydrogen atom, a fluorine atom, a chlorine atom, a bromine atom, a substituted or unsubstituted C1-C3 alkyl, or a substituted or unsubstituted C1-C3 alkoxy, and at least one of the $R_{11}$, the $R_{12}$, the $R_{13}$, and the $R_{14}$ comprises a fluorine atom; and

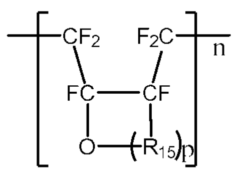 formula (AIII);

in the formula (AIII), $R_{15}$ comprises a single bond or a substituted or unsubstituted C1-C3 alkyl; p is selected from a positive integer of 1 to 3; and n is selected from a positive integer of 1,000 to 30,000.

**6.** The battery cell according to any one of claims 1 to 5, wherein the liquid-retaining polymer comprises an ether polymer,

optionally, the ether polymer is made into a sheet structure; the sheet structure is subjected to a dynamic frequency scanning test at $(T_{m2}+20)$°C to obtain an elastic modulus G'-energy consumption modulus G" curve, slope of the elastic modulus G'-energy consumption modulus G" curve is $K_1$, 1 <Ki<oo, and $T_{m2}$°C represents

melting temperature of the ether polymer;
further optionally, the ether polymer comprises at least one of a structural unit represented by formula (BI) and a structural unit represented by formula (BII),

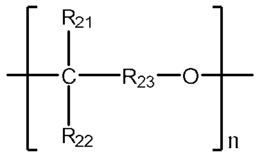
formula (BI);

in the formula (BI), $R_{21}$ and $R_{22}$ each independently comprise a hydrogen atom, a substituted or unsubstituted C1-C3 alkyl, or a substituted or unsubstituted C1-C3 alkoxy; and $R_{23}$ comprises a substituted or unsubstituted C1-C5 alkylene; and

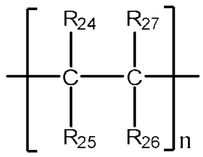
formula (BII);

in the formula (BII), $R_{24}$ to $R_{27}$ each independently comprise a hydrogen atom, a substituted or unsubstituted C1-C3 alkyl, or a substituted or unsubstituted C1-C3 alkoxy or ether radical, and at least one of the $R_{24}$ to the $R_{27}$ comprises a substituted or unsubstituted C1-C3 alkoxy or ether radical.

**7.** The battery cell according to any one of claims 1 to 6, wherein the liquid-retaining polymer comprises an ester polymer;

optionally, the ester polymer is made into a sheet structure; the sheet structure is subjected to a dynamic frequency scanning test at $(T_{m3}+20)$°C to obtain an elastic modulus G'-energy consumption modulus G" curve, slope of the elastic modulus G'-energy consumption modulus G" curve is $K_2$, $1<K_2<\infty$, $T_{m3}$°C represents melting temperature of the ester polymer; optionally, $1<K_2\leq100$; and further optionally, $1<K_2\leq10$;
further optionally, the ester polymer comprises at least one of a structural unit represented by formula (CI) and a structural unit represented by formula (CII),

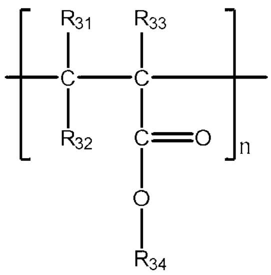
formula (CI);

in the formula (CI), $R_{31}$, $R_{32}$, and $R_{33}$ each independently comprise a hydrogen atom or a substituted or unsubstituted C1-C8 alkyl; and $R_{34}$ comprises a substituted or unsubstituted C1-C8 alkyl or a substituted or unsubstituted C1-C8 hydroxyalkyl; and

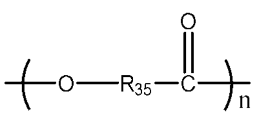
formula (CII);

in the formula (CII), $R_{35}$ comprises a substituted or unsubstituted C2-C6 methylene; and optionally, the $R_{35}$ each independently comprises a substituted or unsubstituted C2-C4 methylene.

**8.** The battery cell according to any one of claims 1 to 7, wherein the liquid-retaining polymer comprises an aldehyde-ketone polymer,

optionally, the aldehyde-ketone polymer is made into a sheet structure; the sheet structure is subjected to a dynamic frequency scanning test at $(T_{m4}+20)$°C to obtain an elastic modulus G'-energy consumption modulus G" curve, slope of the elastic modulus G'-energy consumption modulus G" curve is $K_3$,$0.8 \leq K_3 < \infty$, $T_{m4}$°C represents melting temperature of the aldehyde-ketone polymer; optionally, $0.8 \leq K_3 \leq 100$; and further optionally, $0.8 \leq K_3 \leq 10$; further optionally, the aldehyde-ketone polymer comprises at least one of a structural unit represented by formula (DI) and a structural unit represented by formula (DII),

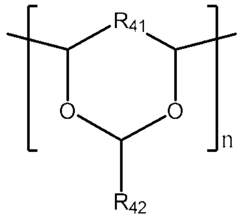

formula (DI);

in the formula (DI), $R_{41}$ comprises a single bond, a substituted or unsubstituted C1-C6 methylene; and $R_{42}$ comprises a hydrogen atom or a substituted or unsubstituted C1-C6 alkyl; and

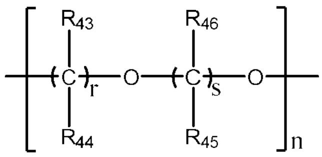

formula (DII);

in the formula (DII), $R_{43}$ to $R_{46}$ each independently comprise a hydrogen atom, a hydroxyl, a substituted or unsubstituted C1-C3 alkyl, a substituted or unsubstituted C1-C3 hydroxyalkyl, or a substituted or unsubstituted C1-C3 alkoxy; r and s are each independently selected from an integer of 0 to 5, and at least one of r and s is selected from a positive integer.

9. The separator according to any one of claims 1 to 8, wherein the separator comprises a porous substrate, and the liquid-retaining polymer is distributed in pores of the porous substrate.

10. The separator according to any one of claims 1 to 9, wherein the separator comprises the porous substrate and a polymer layer arranged on at least one surface of the porous substrate, the polymer layer comprising the liquid-retaining polymer.

11. The separator according to any one of claims 1 to 10, wherein coating weight of the liquid-retaining polymer is 0.5 mg/1540.25 $mm^2$ to 5 mg/1540.25 $mm^2$.

12. A battery cell, comprising the separator according to any one of claims 1 to 11.

13. A battery, comprising the battery cell according to claim 12.

14. An electrical apparatus, comprising the battery according to claim 13.

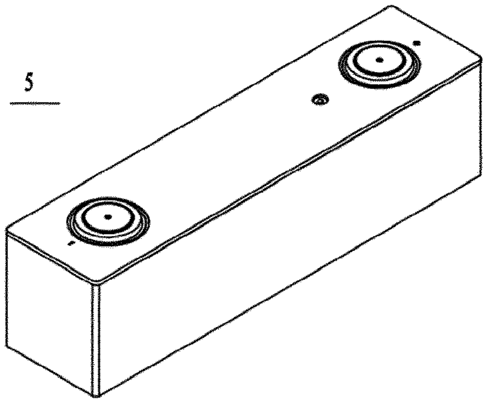


FIG. 1

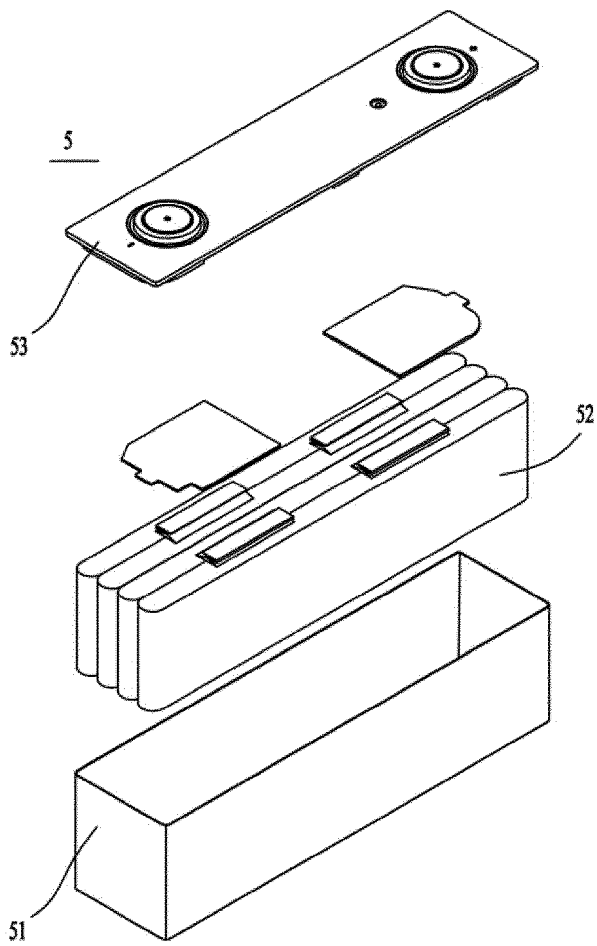


FIG. 2

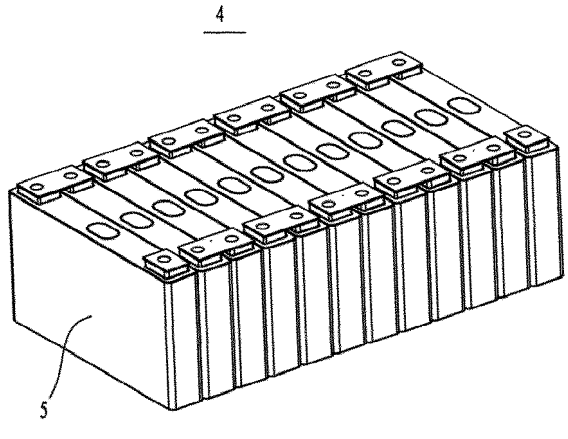


FIG. 3

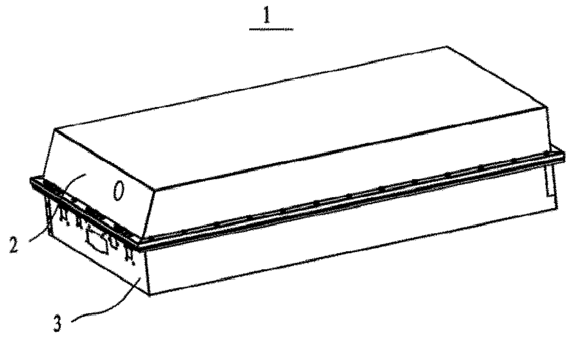


FIG. 4

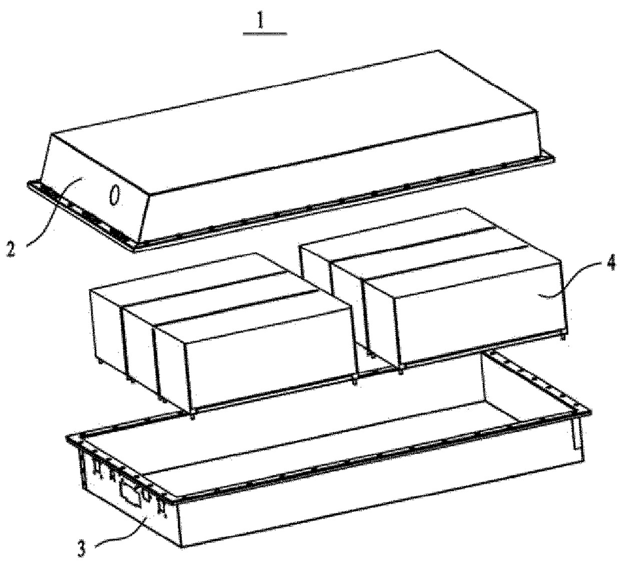


FIG. 5

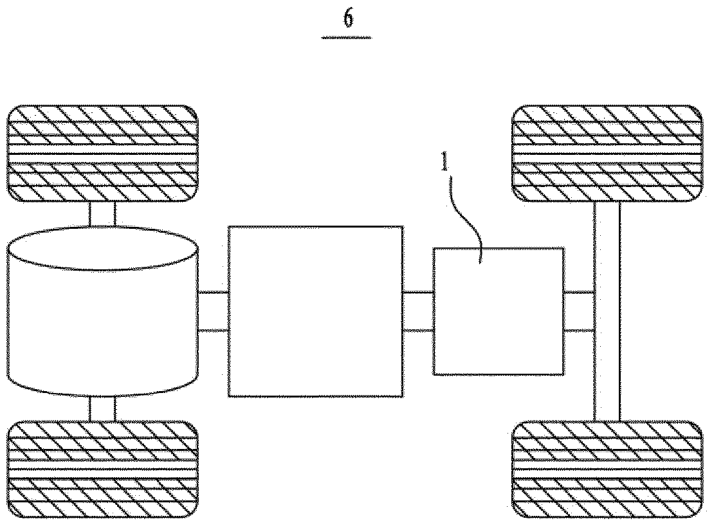


FIG. 6

## INTERNATIONAL SEARCH REPORT

International application No.
**PCT/CN2023/088803**

**A. CLASSIFICATION OF SUBJECT MATTER**

H01M50/414(2021.01)i； H01M50/417(2021.01)i； H01M50/411(2021.01)i； H01M50/409(2021.01)i； H01M50/40(2021.01)i

According to International Patent Classification (IPC) or to both national classification and IPC

**B. FIELDS SEARCHED**

Minimum documentation searched (classification system followed by classification symbols)

IPC： H01M

Documentation searched other than minimum documentation to the extent that such documents are included in the fields searched

Electronic data base consulted during the international search (name of data base and, where practicable, search terms used)

CNABS: CNTXT; WPABS; DWPI; USTXT; EPTXT; WOTXT; ISI; CNKI: 宁德时代, 隔板, 隔离板, 隔离膜, 隔离片, 隔膜, 间隔件, 间隔元件, 保液, 保水, 浸润, 润湿, 加压, 压力, 氟, 酯, 醚, 醛酮, 聚合物, 结晶度, 熔融温度, 熔化温度, FEP, HFP, PFA, VDF, TFE, separator, membrane, electrolyte, liquid, retention, retain+, absorption, wettability, press+, fluoropolymer, fluorine, ether, ester, polymer, coat+

**C. DOCUMENTS CONSIDERED TO BE RELEVANT**

| Category* | Citation of document, with indication, where appropriate, of the relevant passages | Relevant to claim No. |
|---|---|---|
| A | CN 109065805 A (HUNAN SHUO PU NEW MATERIAL CO., LTD.) 21 December 2018 (2018-12-21)<br>description, paragraphs [0005]-[0031] | 1-14 |
| A | CN 110571395 A (REPT ENERGY CO., LTD. et al.) 13 December 2019 (2019-12-13)<br>entire document | 1-14 |
| A | CN 105552284 A (CANGZHOU MINGZHU PLASTIC CO., LTD.) 04 May 2016 (2016-05-04)<br>entire document | 1-14 |
| A | CN 109738425 A (JIANGSU TAFEL NEW ENERGY TECHNOLOGY CO., LTD. et al.) 10 May 2019 (2019-05-10)<br>entire document | 1-14 |
| A | CN 114868301 A (LG ENERGY SOLUTION LTD.) 05 August 2022 (2022-08-05)<br>entire document | 1-14 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **07 November 2023** | **24 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
**PCT/CN2023/088803**

**C. DOCUMENTS CONSIDERED TO BE RELEVANT**

| Category* | Citation of document, with indication, where appropriate, of the relevant passages | Relevant to claim No. |
|---|---|---|
| A | US 2015147627 A1 (SAMSUNG SDI CO., LTD.) 28 May 2015 (2015-05-28)<br>entire document | 1-14 |

Form PCT/ISA/210 (second sheet) (July 2022)

**INTERNATIONAL SEARCH REPORT**
**Information on patent family members**

International application No.
**PCT/CN2023/088803**

| Patent document cited in search report | | | Publication date (day/month/year) | Patent family member(s) | | | Publication date (day/month/year) |
|---|---|---|---|---|---|---|---|
| CN | 109065805 | A | 21 December 2018 | CN | 109065805 | B | 20 July 2021 |
| CN | 110571395 | A | 13 December 2019 | None | | | |
| CN | 105552284 | A | 04 May 2016 | WO | 2017107436 | A1 | 29 June 2017 |
| CN | 109738425 | A | 10 May 2019 | CN | 109738425 | B | 11 February 2022 |
| CN | 114868301 | A | 05 August 2022 | US | 2023036332 | A1 | 02 February 2023 |
| | | | | KR | 20210079234 | A | 29 June 2021 |
| | | | | WO | 2021125916 | A1 | 24 June 2021 |
| | | | | EP | 4071915 | A1 | 12 October 2022 |
| US | 2015147627 | A1 | 28 May 2015 | KR | 20150060527 | A | 03 June 2015 |
| | | | | JP | 2015103404 | A | 04 June 2015 |
| | | | | JP | 2015103405 | A | 04 June 2015 |
| | | | | JP | 6234186 | B2 | 22 November 2017 |
| | | | | JP | 6406813 | B2 | 17 October 2018 |
| | | | | KR | 102290315 | B1 | 19 August 2021 |

Form PCT/ISA/210 (patent family annex) (July 2022)